# EUROPEAN PATENT SPECIFICATION

(11) **EP 4 468 757 B1**
(45) Date of publication and mention of the grant of the patent: **25.11.2026**
(21) Application number: 23773929.7
(22) Date of filing: 22.03.2023
(51) Int. Cl.: H04L 67/146, H04L 67/141, H04L 12/28, G06F 9/54, H04L 65/1069, H04L 65/403, H04W 4/02, H04W 4/70, H04L 67/02, H04L 9/40, H04W 4/80

(54) **MULTI-DEVICE COLLABORATION FOR THE GENERATION OF SESSION-SPECIFIC DATA OBJECTS**
ZUSAMMENARBEIT MEHRERER VORRICHTUNGEN ZUR ERZEUGUNG SITZUNGSSPEZIFISCHER DATENOBJEKTE
COLLABORATION MULTI-DISPOSITIFS POUR LA GÉNÉRATION D'OBJETS DE DONNÉES SPÉCIFIQUES À UNE SESSION

(30) Priority: 24.03.2022 CN 202210297167
(43) Date of publication of application: 27.11.2024
(73) Proprietor: Huawei Technologies Co., Ltd., Shenzhen, Guangdong 518129 (CN)
(72) Inventor: GONG, Ashi, Shenzhen, Guangdong 518129 (CN); BAO, Yayong, Shenzhen, Guangdong 518129 (CN); HAN, Lu, Shenzhen, Guangdong 518129 (CN)
(74) Representative: MERH-IP Matias Erny Reichl Hoffmann Patentanwälte PartG mbB
(86) International application number: PCT/CN2023/083127
(87) International publication number: WO 2023/179682

(56) References cited:
- CN-A- 108 647 331
- CN-A- 114 071 425
- US-A1- 2002 198 941
- US-A1- 2012 317 296
- US-A1- 2015 254 222
- US-A1- 2019 250 800

## Description

### TECHNICAL FIELD

This application relates to the field of electronic device technologies, and in particular, to a device collaboration method.

### BACKGROUND

With development of electronic devices, multi-device interconnection scenarios are increasingly enhanced in daily life, and demands for cross-device access and multi-device collaboration are increasingly stronger.

Currently, resource sharing may be implemented between devices during multi-device collaboration. However, when data collaboration is performed between the devices, a data transmission link and interface need to be established between the devices, and an operation is complex. Therefore, how to improve device collaboration efficiency is an urgent problem to be resolved.

Document US 2019/250800 A1 discloses a collaborative editing session in which multiple user computing devices connected to the session are able to concurrently make edits to their respective local canvases, receive changes from remote canvases, and determine whether to apply the remote changes.

### SUMMARY

This application provides a device collaboration method, to reduce an amount of data transmitted between collaboration devices, and improve collaboration efficiency of the collaboration devices.

Objects of the present invention are defined by the independent claims. Preferred embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention.

### BRIEF DESCRIPTION OF DRAWINGS

FIG. 1 is a diagram of a partial process of an RPC mechanism according to an embodiment of this application;
FIG. 2 is a diagram of an architecture of a system 400 according to an embodiment of this application;
FIG. 3 is a diagram of a structure of an electronic device 100 according to an embodiment of this application;
FIG. 4 is a block diagram of a software structure of an electronic device 100 according to an embodiment of this application;
FIG. 5 is a diagram of functional modules of a JS programming framework according to an embodiment of this application;
FIG. 6 is a diagram of collaboration interaction between an electronic device 100 and an electronic device 200 according to an embodiment of this application;
FIG. 7 to FIG. 9 are example UI diagrams in which any two instances of two collaboration devices in a group are associated with a same session ID;
FIG. 10 to FIG. 12 are example UI diagrams in which any two instances of a plurality of collaboration devices in a group are associated with a same session ID;
FIG. 13 is a diagram of implementing data synchronization between collaboration devices according to an embodiment of this application;
FIG. 14 is a schematic flowchart of a device collaboration method according to an embodiment of this application; and
FIG. 15A to FIG. 15G are a group of UI diagrams according to an embodiment of this application.

### DESCRIPTION OF EMBODIMENTS

Technical solutions according to embodiments of this application are clearly and completely described in the following with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The terms "first" and "second" mentioned below are merely used for description, and shall not be understood as an implication or implication of relative importance or implicit indication of a quantity of indicated technical features. Therefore, a feature limited by "first" and "second" may explicitly or implicitly include one or more of the features. In the descriptions of embodiments of this application, unless otherwise specified, "a plurality of" means two or more.

A term "user interface (user interface, UI)" in the following embodiments of this application is a medium interface for interaction and information exchange between a user and an application or an operating system, and implements conversion between an internal form of information and a form acceptable to the user. The user interface is usually in a form of a graphical user interface (graphical user interface, GUI), and is a user interface that is related to a computer operation and that is in a form of a graphic. The user interface may be a visual interface element like a text, an icon, a button, a menu, a tab, a text box, a dialog box, a status bar, a navigation bar, or a widget that is displayed on a display of an electronic device.

Currently, a link and an interface for data transfer may be established between electronic devices by using a remote procedure call (remote procedure call, RPC) mechanism, to perform data collaboration.

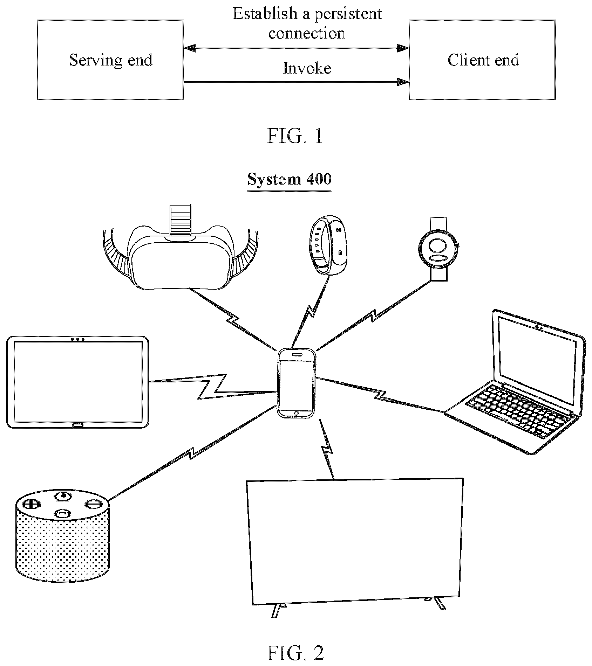

FIG. 1 is an example diagram of a partial process of an RPC mechanism.

The RPC mechanism mainly includes the following steps.
1. A serving end defines and implements an AIDL interface for invoking a remote message.
2. The serving end exposes the AIDL interface to a client end by using a server.
3. A persistent connection is established between the client end and serving end.
4. The client end is bound to the client end, invokes the AIDL interface of the client end, and invokes a message on the client end.

It can be learnt from the foregoing steps that, during specific implementation of the existing RPC mechanism, the client end is bound to the serving end, and the persistent connection needs to be maintained between the client end and the serving end, which increases internal resource consumption of the client end. A developer also needs to implement internal code implementation such as creating a communication interface of the serving end, binding the client end and the serving end (that is, establishing a communication connection between the client end and the serving end), and maintaining the persistent connection between the client end and the serving end, which increases the burden of the developer.

Therefore, an embodiment of this application provides a device collaboration method. The method includes: By using a programming framework provided in this embodiment of this application, an electronic device 100 may redefine a data object according to a getter/setter method through data interception, to obtain a distributed data object. The electronic device 100 may detect whether an attribute value of the distributed data object changes, and then the electronic device 100 sends distributed data to the electronic device 200. In addition, two instances or data objects that are the same on the electronic device 100 and the electronic device 200 are associated with a same session identifier (session ID), so that data of the two instances that are the same on the electronic device 100 and the electronic device 200 is the same. In this way, automatic synchronization of distributed data objects on the electronic devices is implemented.

In some embodiments, the electronic device 100 may also be referred to as a first electronic device, and the electronic device 200 may also be referred to as a second electronic device.

According to the method provided in this embodiment of this application, by using the programming framework provided in this embodiment of this application, a client end and a serving end do not need to be distinguished, and a persistent connection does not need to be maintained between electronic devices. In this case, development efficiency of an application developer is improved. Further, a distributed data object is created through data interception. The electronic device 100 may monitor an instance attribute value of the distributed data object, and send only a changed instance attribute value to the electronic device 200. In this way, an amount of transmitted data is reduced and device collaboration efficiency is improved. In addition, resource sharing between a plurality of electronic devices can be implemented in this embodiment of this application.

For example, when it is inconvenient for a user to use a mobile phone for navigation during cycling, the mobile phone cannot process navigation information. When the mobile phone and a smartwatch are in a same distributed network, the mobile phone may seamlessly switch map information for navigation on the mobile phone to the smartwatch with one tap, and then the smartwatch continues to display the navigation information. In this way, the user can view the navigation information during cycling.

For another example, when a mobile phone and a television are in a same distributed network, the mobile phone may seamlessly switch a video watched on the mobile phone to the television with one tap, and then the television continues to provide a video playing service, so that a user can enjoy large-screen experience.

For another example, in an office scenario, during a meeting, a staff member may operate an office computer to display a presentation file. The office computer may establish a collaboration connection to an office device of another person, so that the presentation file on the office computer may be displayed on the office device of the another person. In this way, office efficiency is improved.

The following describes a system architecture provided in an embodiment of this application.

Refer to FIG. 2. FIG. 2 is a diagram of an architecture of a system 400 according to an embodiment of this application.

The system 400 may include a plurality of electronic devices. The plurality of electronic devices may be of various types. Specific types of the plurality of electronic devices are not specially limited in this embodiment of this application. For example, the plurality of electronic devices include a mobile phone, and may further include a tablet computer, a desktop computer, a laptop computer, a handheld computer, a notebook computer, a smart screen, a wearable device, an augmented reality (augmented reality, AR) device, a virtual reality (virtual reality, VR) device, an artificial intelligence (artificial intelligence, AI) device, telematics, a smart headset, and a game console, and may further include an internet of things (internet of things, IOT) device or a smart home device like a smart water heater, a smart lamp, or a smart air conditioner. This is not limited thereto. The plurality of electronic devices in the system 400 may further include a non-portable terminal device like a laptop (laptop) computer having a touch-sensitive surface or a touch panel, or a desktop computer having a touch-sensitive surface or a touch panel, or the like.

Different software operating systems (operating systems, OSs) may be configured for the plurality of electronic devices, including but not limited to Harmony^{®}, Android^{®}, iOS^{®}, Windows^{®}, Linux^{®}, and the like. Harmony^{®} is Huawei HarmonyOS.

The plurality of electronic devices may all be configured with a same software operating system, for example, all may be configured with Harmony^{®}.

The plurality of electronic devices may establish a collaboration connection in any one of the following manners.

Manner 1: The plurality of electronic devices may be connected to a same network. For example, the plurality of electronic devices may be connected to a same local area network to establish the collaboration connection.

Manner 2: A same system account is used to log in to the plurality of electronic devices, to establish the collaboration connection. For example, the system account used to log in to the plurality of electronic devices may be "HW1234".

Manner 3: System accounts used to log in to the plurality of electronic devices may all belong to a same account group. For example, the system account used to log in to the plurality of electronic devices include "HW001", "HW002", and "HW003". The system accounts "HW001", "HW002", and "HW003" belong to an account group "Huawei Home".

Manner 4: The plurality of electronic devices may establish the collaboration connection in a manner like near field communication (Near Field Communication, NFC), Bluetooth (bluetooth, BT), a wireless local area network (wireless local area network, WLAN) like a wireless fidelity point to point (wireless fidelity point to point, Wi-Fi P2P), or an infrared (infrared, IR) technology.

Manner 5: The plurality of electronic devices may establish a temporary account group by scanning a same two-dimensional barcode, and establish the collaboration connection for communication.

In addition to the foregoing five manners, the electronic device 100 may further establish the collaboration connection in another manner. This is not limited in this embodiment of this application.

In addition, the plurality of electronic devices may also be connected and communicate with each other according to a combination of any quantity of the foregoing manners. This is not limited in this embodiment of this application.

In another embodiment, the system 400 may include only two electronic devices, for example, the electronic device 100 and the electronic device 200, and the electronic device 100 establishes a collaboration connection to the electronic device 100. In the following embodiments of this application, an example in which the system 400 includes two electronic devices is used for description. The electronic device 100 is a mobile phone, and the electronic device 200 is a watch.

One or more applications are installed on the electronic device 100, and one or more applications are also installed on the electronic device 200. After the electronic device 100 establishes the collaboration connection to the electronic device 200, the electronic device 100 creates a distributed data object of an application 1 by using a JS programming framework provided in this embodiment of this application. Then, the electronic device 100 sends the distributed data object to the electronic device 200, and the electronic device 200 may output the distributed data object. When it is inconvenient for a user to use the mobile phone for navigation during cycling, and the mobile phone and the smartwatch are in a same distributed network, the mobile phone may seamlessly switch map information for navigation on the mobile phone to the smartwatch with one tap, and then the smartwatch displays the navigation information. In this way, the user can view the navigation information during cycling.

When the electronic device 100 establishes the collaboration connection to the electronic device 200, the JS programming framework creates a session ID, and associates the session ID with an instance 1 of the application 1 that is locally created. Then, the electronic device 200 obtains the session ID, and associates the session ID with an instance 1 of an application 1 on the electronic device 200. In this way, after the distributed data object on the electronic device 100 changes (for example, the distributed data object is updated), the distributed data object on the electronic device 100 also changes accordingly.

It should be noted that the data object may be understood as memory data (also referred to as service data) generated during running of an application, and an instance may be understood as a specification of a data object of a specific type. The data object includes one or more types of data objects, and each type of data object may include one or more types of instances. The type of the data object includes but is not limited to: an audio data object, a text data object, an image data object, a video data object, and the like. For example, when a navigation application on the electronic device 100 is started and run, the electronic device 100 may display route information for navigation on the navigation application while announcing the route information for navigation on the application navigation. In this case, the route information displayed by the electronic device 100 for navigation on the navigation application may be referred to as a picture data object, and the route information for navigation on the navigation application announced by the electronic device 100 is referred to as an audio data object. For example, the data object may be a text data object in the navigation information, and the text data object in the navigation information may further include a plurality of different types of instances. The plurality of different types of instances may be a time instance, a remaining distance instance, a duration instance, and the like.

In some embodiments, for a data object of one type, the data object includes instances of a plurality of different types. The instances of the plurality of different types may be collectively referred to as a same instance in the electronic device, or types of the instances may not be distinguished, and a data object of each type includes only one instance.

A specific implementation of creating the distributed data object by the JS programming framework is described in detail in subsequent embodiments. Details are not described in this embodiment of this application.

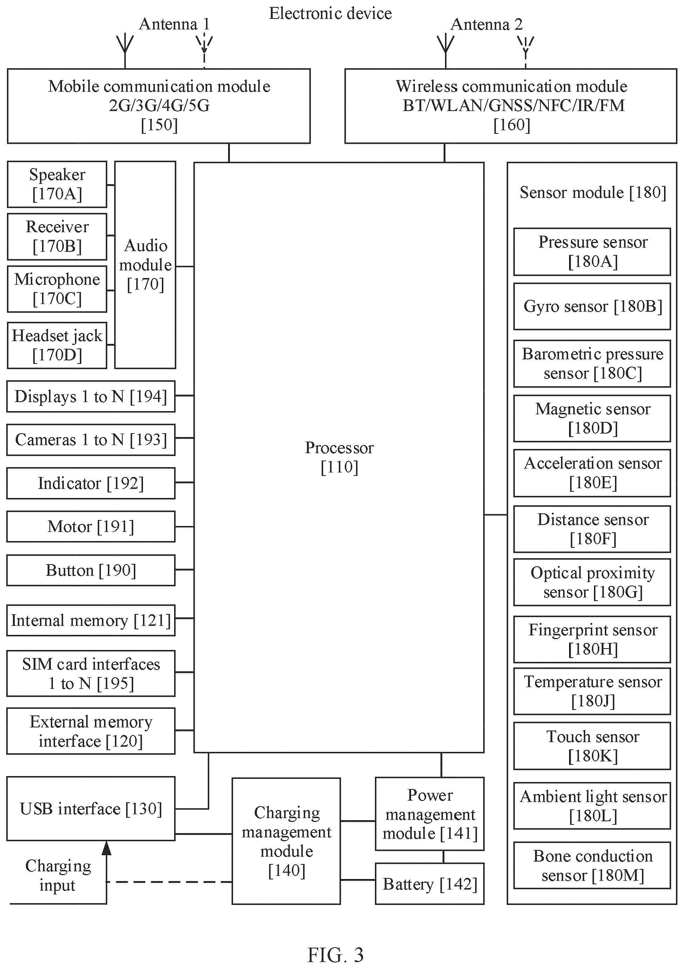

FIG. 3 is a diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to control instruction fetch and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or the data again, the processor may directly invoke the instruction or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and analog signal sampling, quantization, and coding. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI may be configured to connect the processor 110 to peripheral components such as the display 194 or the camera 193. The MIPI includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may be further configured as the I2C interface, the I2S interface, the UART interface, the MIPI, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device like an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution that is for wireless communication including 2G, 3G, 4G, 5G, or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal to an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and the modem processor and the mobile communication module 150 or another functional module may be disposed in a same device.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal to an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include technologies such as a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, and/or IR. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and can continuously perform self-learning. Applications such as intelligent cognition of the electronic device 100, for example, image recognition, facial recognition, speech recognition, and text understanding, may be implemented through the NPU.

The internal memory 121 may be one or more random access memories (random access memory, RAM), and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, like a 5th generation DDR SDRAM that is usually referred to as DDR5 SDRAM), or the like. The non-volatile memory may include a magnetic disk storage device and a flash memory (flash memory).

The flash memory may be classified, based on an operation principle, into an NOR flash, an NAND flash, a 3D NAND flash, and the like; may be classified, based on a quantity of electric potential levels of a cell, into a single-level cell (single-level cell, SLC), a multi-level cell (multi-level cell, MLC), a triple-level cell (triple-level cell, TLC), a quad-level cell (quad-level cell, QLC), and the like; or the flash memory may be classified, based on storage specifications, into a universal flash storage (English: universal flash storage, UFS), an embedded multimedia card (embedded multi-media card, eMMC), and the like.

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store the executable program, the data of the user and the application, and the like, and may be loaded into the random access memory in advance, so that the processor 110 can directly perform reading and writing.

The external memory interface 120 may be configured to connect to an external non-volatile memory, to expand a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through a mouth of a user, to input a sound signal to the microphone 170C. At least one microphone 170C may be disposed in the electronic device 100. In some other embodiments, two microphones 170C may be disposed in the electronic device 100, to collect a sound signal and implement a noise cancellation function. In some other embodiments, three, four, or more microphones 170C may alternatively be disposed in the electronic device 100, to collect a sound signal, implement noise cancellation, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyro sensor 180B may be configured to determine a moving posture of the electronic device 100. In some embodiments, angular velocities of the electronic device 100 around three axes (axes x, y, and z) may be determined by using the gyro sensor 180B. The gyro sensor 180B may be configured to implement image stabilization during photographing. For example, when the shutter is pressed, the gyro sensor 180B detects an angle at which the electronic device 100 jitters, and calculates, based on the angle, a distance for which a lens module needs to compensate, and the lens cancels the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude based on a value of a barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature like automatic unlocking upon opening is set based on a detected opening or closing state of the flip cover or a clamshell.

The acceleration sensor 180E may detect accelerations in various directions (usually on the three axes) of the electronic device 100. When the electronic device 100 is still, a magnitude and a direction of gravity may be detected. The acceleration sensor 180E may be further configured to identify a posture of the electronic device, and is used in an application like switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects reflected infrared light from a nearby object through the photodiode. When sufficient reflected light is detected, it can be determined that there is an object near the electronic device 100. When insufficient reflected light is detected, the electronic device 100 can determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a flip cover mode or a pocket mode to automatically unlock or lock a screen.

The ambient light sensor 180L is configured to sense ambient light brightness. The electronic device 100 may adaptively adjust brightness of the display 194 based on sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when a temperature is less than another threshold, the electronic device 100 heats the battery 142 to prevent the electronic device 100 from abnormal shutdown caused by a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in a headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input to generate a button signal input related to user settings and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. For touch operations performed on different areas of the display 194, the motor 191 may also correspond to different vibration feedback effects. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. Different types of SIM cards are compatible in the SIM card interface 195. The SIM card interface 195 is also compatible with an external storage card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. In this embodiment of the present invention, an Android system of a layered architecture is used as an example to illustrate the software structure of the electronic device 100.

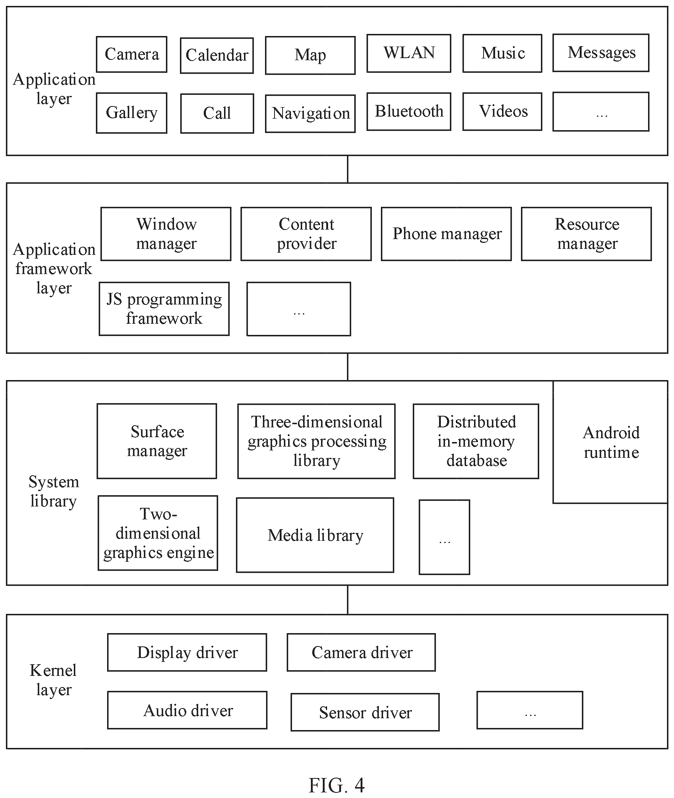

FIG. 4 is a block diagram of the software structure of the electronic device 100 according to an embodiment of the present invention.

Software is divided into several layers based on the layered architecture, and the layers implements respective functions. The layers communicate with each other through a software interface. In some embodiments, the Android system is divided into four layers: an application layer, an application framework layer, an Android runtime (Android runtime) and system library, and a kernel layer from top to bottom.

The application layer may include various application packages.

As shown in FIG. 4, the application packages may include applications such as Camera, Gallery, Calendar, Call, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a JS programming framework, and the like.

The window manager is configured to manage a window program. The window manager may obtain a size of the display, determine whether there is a status bar, perform screen locking, take a screenshot, and the like.

The content provider is configured to: store and obtain data, and make the data accessible to an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a view displaying a text and a view displaying a picture.

The phone manager is configured to provide a communication function of the electronic device 100, for example, management of a call status (including answering, declining, or the like).

The resource manager provides various resources such as a localized character string, an icon, an image, a layout file, and a video file for an application.

The JS programming framework may be used to redefine, according to a getter/setter method through JS data interception, a JS data object transferred by an application, to obtain a JS wrapper object, and then wrap the JS wrapper object into a JS distributed data object, so as to obtain a JS distributed data object.

The JS programming framework is further used to invoke a distributed in-memory database in a system library, and store the obtained JS distributed data object into the distributed in-memory database.

When the electronic device 100 establishes a collaboration connection to the electronic device 200, the JS programming framework creates a session ID, and associates the session ID with an instance 1 of the distributed data object.

Then, when the electronic device 100 sends a collaboration message to the electronic device 200, the collaboration message carries the session ID.

After receiving the coordination message, the electronic device 200 obtains, through parsing, the session ID carried in the coordination message, and based on the session ID, the electronic device 100 stores the session ID. Then, the electronic device 100 sends the instance 1 of the distributed data object to the electronic device 200, and the electronic device 200 generates the distributed data object based on the instance 1 after receiving the instance 1. In addition, the electronic device 200 associates a local instance 1 with the session ID. The instance 1 on the electronic device 100 and the instance 1 on the electronic device 200 are associated with the same session ID. In this way, after an attribute value of the instance 1 of the electronic device 100 changes (for example, adding, deleting, query, or modification is performed), an attribute value of the instance 1 on the electronic device 200 also changes accordingly.

The Android runtime includes a kernel library and a virtual machine. The Android runtime is responsible for scheduling and management of the Android system.

The kernel library includes two parts: a function that needs to be invoked in java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), a 2D graphics engine (for example, SGL), and a distributed in-memory database.

The surface manager is configured to manage a display subsystem and provide fusion of 2D and 3D layers for a plurality of applications.

The media library supports playing and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

**The distributed in-memory database provides a capability of managing distributed databases, synchronizing distributed databases of electronic devices, and accessing (adding, deleting, modifying, and querying) a distributed data object.**

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a tap operation, and a control corresponding to the tap operation is a control of a camera application icon is used. A camera application invokes an interface of the application framework layer to enable the camera application, then enables the camera driver by invoking the kernel layer, and captures a static image or a video by using the camera 193.

**The following describes functional modules of** a **JS programming framework provided in this application.**

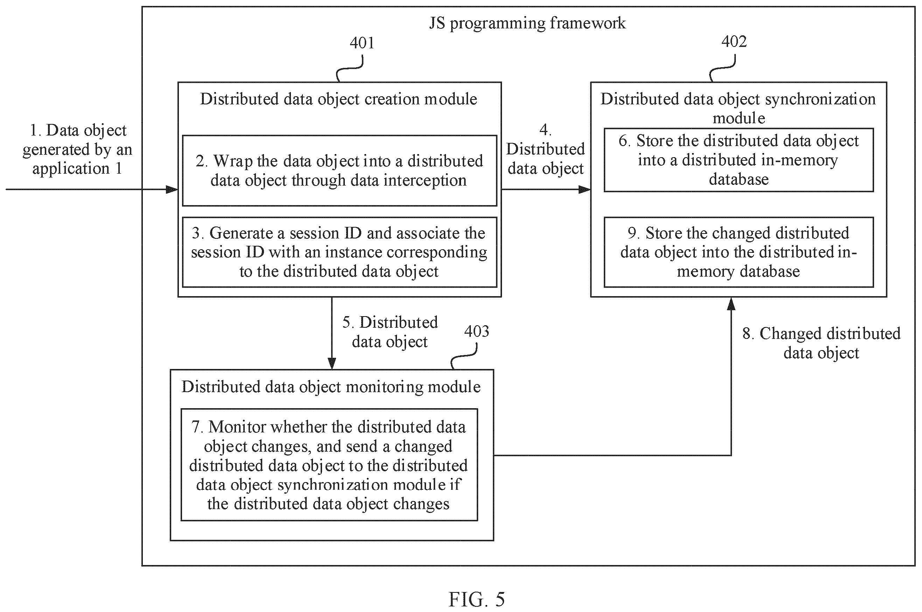

FIG. 5 is an example diagram of functional modules of a JS programming framework according to an embodiment of this application.

The diagram of the functional modules of the JS programming framework in FIG. 5 is a diagram of functional modules on a side of a collaboration initiation device.

As shown in FIG. 5, the JS programming framework includes a distributed data object creation module 401, a distributed data object synchronization module 402, and a distributed data object monitoring module 403.

It should be noted that the plurality of functional modules may exist independently to implement preset functions, or any two or more functional modules may be combined to implement preset functions of the two or more functional modules. This is not limited in this embodiment of this application.

In some embodiments, the distributed data object creation module 401 is configured to: receive a data object generated by an application 1, redefine, through data interception according to a getter/setter method, the data object transferred by the application to obtain a wrapper object, and wrap the wrapper object into a distributed data object.

Data interception is to perform an additional operation when an operation of access or modification is intercept by using a preset code function during access or modification of a specific instance attribute of a data object. For example, after the distributed data object creation module 401 obtains a data object 1, the distributed data object creation module 401 invokes a getter method to obtain an attribute value of an instance 1 of the data object 1. The distributed data object creation module 401 invokes a setter method to add data listening and data interception to the attribute value of the instance 1. In this way, when the attribute value of the instance 1 changes, the distributed data object creation module 401 may detect a change of the attribute value of the instance 1, and then update the attribute value of the instance 1 in a timely manner.

The distributed data object creation module 401 sends a distributed data object to the application 1. After the application 1 obtains the distributed data object, the application 1 may perform an operation on the distributed data object (for example, perform a value update operation on the distributed data object).

The data object may be a JS (java script) data object. The distributed data object creation module 401 may redefine, according to the getter method or the setter method, the JS data object through JS data interception, to obtain a final JS wrapper object, and then wrap the JS wrapper object into a distributed data object, to obtain a JS distributed data object. In the following embodiments of this application, an example in which a data object is a JS data object is used for description. A JS distributed data object may also be referred to as a distributed data object in the following embodiments of this application.

In some embodiments, the distributed data object creation module 401 is further configured to generate a session ID, and associate the session ID with an instance corresponding to the distributed data object.

In some embodiments, the distributed data object creation module 401 invokes a cross-device communication module (not shown in FIG. 5) to send the session ID to a peer device (or a device that accepts collaboration). After receiving the session ID, the peer device associates the session ID with an instance 1 of an application 1. In this way, after an instance 1 on a local device (or a collaboration initiation device) and an instance 1 on a peer device are associated with a same session ID, after an attribute value of the instance 1 on an electronic device 100 changes and an attribute value of the instance 1 on an electronic device 200 changes, data synchronization between the different devices is implemented.

After the distributed data object creation module 401 obtains the distributed data object, the distributed data object creation module 401 sends the distributed data object to the distributed data object synchronization module 402 and the distributed data object monitoring module 403 separately.

The distributed data object synchronization module 402 is configured to store the distributed data object into a distributed in-memory database in a key-value (key-value) form.

**Table 1**

| Data object | Field | Database name | Attribute value |
|---|---|---|---|
| Distributed data object 1 | Field 1 | kv store1 | Key1 |
| | Field 2 | | Key2 |
| Distributed data object 2 | Field 3 | kv store2 | Key3 |
| | Field 4 | | Key4 |
| ... | | | |
| Distributed data object n | Field 5 | kv store n | Key5 |
| | Field 6 | | Key6 |

Table 1 shows an example storage form of distributed data objects in the distributed databases. For example, the distributed data object 1 includes the field 1 and the field 2. The field 1 is stored in a distributed content database named kv store 1, and an attribute value of the field 1 stored in kv store 1 is key1. The field 2 is stored in the distributed content database named kv store1, and an attribute value of the field 2 stored in kv store1 is key2. The distributed data object 2 includes the field 3 and the field 4. The field 3 is stored in the distributed content database named kv store2, and an attribute value of the field 3 stored in kv store2 is key3. The field 4 is stored in the distributed content database named kv store2, and an attribute value of the field 4 stored in kv store2 is key4. The distributed data object n includes the field 5 and the field 6. The field 5 is stored in the distributed content database named kv store n, and an attribute value of the field 5 stored in kv store n is key5. The field 6 is stored in the distributed content database named kv store n, and an attribute value of the field 6 stored in kv store n is key6.

The distributed data object monitoring module 403 is configured to monitor whether the attribute value of the distributed data object changes. If the attribute value changes, the distributed data object monitoring module 403 sends the changed distributed data object to the distributed data object synchronization module 402.

The distributed data object synchronization module 402 is further configured to: receive the changed distributed data object sent by the distributed data object monitoring module 403, and store the changed distributed data object in the distributed in-memory database in the key-value (key-value) form.

In some embodiments, the distributed data object synchronization module 402 may simultaneously store the changed distributed data object and a before-change distributed data object in the distributed in-memory database, or the distributed data object synchronization module 402 may replace the before-change distributed data object with the changed distributed data object. Based on this, the distributed data object synchronization module 402 stores only the changed distributed data object, and does not store the before-change distributed data object.

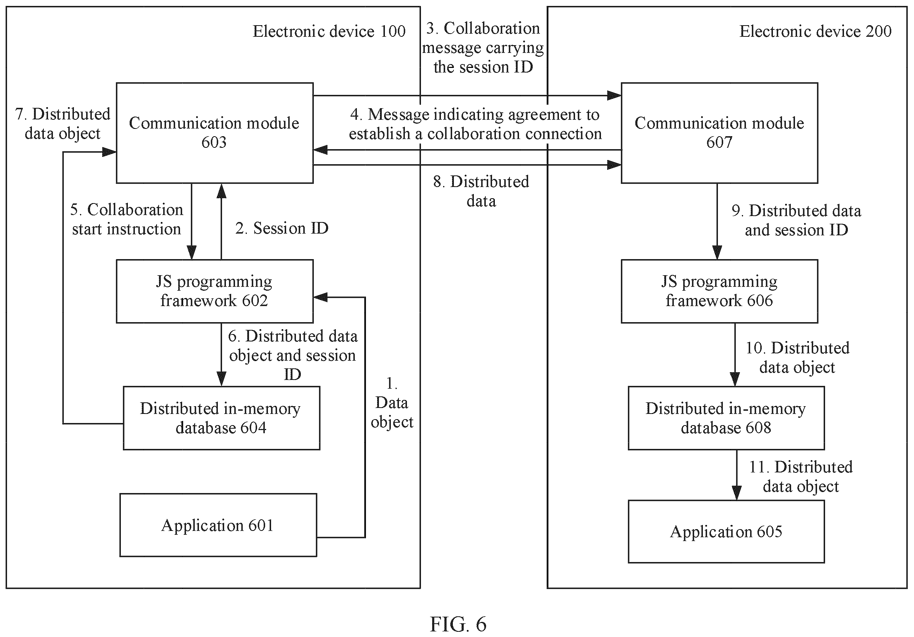

**FIG. 6** **is an example interaction diagram of collaboration between an electronic device 100 and an electronic device 200.**

The electronic device 100 includes an application 601, a JS programming framework 602, a communication module 603, and a distributed in-memory database 604. The electronic device 200 includes an application 605, a JS programming framework 606, a communication module 607, and a distributed in-memory database 608.

It should be noted that the application 601 and the application 605 may be a same application, for example, both are a same map application. The application 601 and the application 605 may alternatively be different applications of a same type. For example, both the application 601 and the application 605 may be applications that provide a navigation service, but the application 601 and the application 605 are not applications developed by a same developer. In the following embodiments of this application, an example in which the application 601 and the application 605 are a same application (for example, both are an application 1) is used for description.

For example, this embodiment of this application is described by using an example in which the electronic device 100 is a collaboration initiation device and the electronic device 200 is a collaboration accepting device.

Steps of collaboration interaction between the electronic device 100 and the electronic device 200 are as follows.
1. When the electronic device 100 initiates collaboration to the electronic device 200, the application 601 in the electronic device generates a data object, and sends the data object to the JS programming framework 602.
   In some embodiments, step 1 may alternatively be performed after the electronic device 100 receives a message that is sent by the electronic device 200 and that indicates agreement to establish a collaboration connection. In other words, step 1 may be performed after step 4.
2. When the electronic device 100 initiates collaboration to the electronic device 200, the JS programming framework 602 in the electronic device 100 is configured to: generate a distributed data object and a session ID associated with an instance corresponding to the distributed data object, and send the session ID to the communication module 603 in the electronic device 100.
3. After the communication module 603 receives the session ID, the communication module 603 sends a collaboration message to the electronic device 200 (for example, the communication module 607 in the electronic device 200), where the collaboration message is used to request to establish the collaboration connection to the electronic device 200.

In some embodiments, the collaboration message further carries the session ID.

In some embodiments, the collaboration message may not carry the session ID, and the communication module 603 in the electronic device 100 separately sends the session ID to the electronic device 200, for example, the communication module 607 in the electronic device 200.

The step in which the communication module 603 separately sends the session ID to the communication module 607 may be performed after the electronic device 100 receives the message that is sent by the electronic device 200 and that indicates agreement to establish the collaboration connection. For example, after step 4 and before step 8, the communication module 603 may separately send the session ID to the communication module 607.

In some embodiments, the electronic device 100 may perform the step of sending the session ID to the communication module 607 only once. For example, the electronic device 100 sends the session ID to the communication module 607 only once.

In some embodiments, the electronic device 100 may periodically perform the step of sending the session ID to the communication module 607, so that the electronic device 100 periodically sends the session ID to the electronic device 200. In this way, a case in which the electronic device 200 does not receive the session ID because the electronic device 100 sends the session ID only once can be avoided.
4. After the communication module 607 receives the collaboration message sent by the electronic device 100, the electronic device 200 determines to establish the collaboration connection to the electronic device 100. In this case, the electronic device 200 may send, to the electronic device 100 (for example, the communication module 603 on the electronic device 100), the message indicating agreement to establish the collaboration connection.
5. After the communication module 603 receives the message that is sent by the electronic device 200 and that indicates agreement to establish the collaboration connection, the communication module 603 sends a collaboration start instruction to the JS programming framework 602, where the collaboration start instruction instructs the JS programming framework 602 to wrap a data object into a distributed data object through data interception, and send the distributed data object to the electronic device 200, so that the electronic device 100 starts collaboration with the electronic device 200.
6. After the JS programming framework 602 in the electronic device 100 receives the collaboration start instruction, the JS programming framework 602 is configured to wrap the data object into the distributed data object through data interception, and store the distributed data object and the session ID in the distributed in-memory database 604.

After the distributed in-memory database 604 receives the distributed data object and the session ID, the distributed in-memory database 604 stores the distributed data object in the distributed in-memory database 604 in a key-value (key-value) form. In some embodiments, the distributed in-memory database 604 further needs to associate the session ID with an instance of the distributed data object. For how to associate the session ID with the instance of the distributed data object, refer to related descriptions in step 9. Details are not described herein in this embodiment of this application.

In some embodiments, step 6 may be performed at any moment after step 1 starts and before step 5 starts. The JS programming framework 602 wraps, in advance, the data object generated by the application 601 into the distributed data object. This can avoid a case in which the JS programming framework starts to wrap, after receiving the collaboration start instruction, the data object generated by the application into the distributed data object. Based on this, in the method provided in embodiments of this application, a collaboration delay can be avoided.

7. After the distributed in-memory database 604 obtains the distributed data object, the distributed in-memory database 604 sends the distributed data object to the communication module 603.

In some embodiments, step 7 may be performed at a moment after the JS programming framework 602 obtains the distributed data object. This can avoid a case in which the JS programming framework 602 starts to send the distributed data object to the communication module 603 only after receiving the collaboration start instruction. Based on this, in the method provided in embodiments of this application, a collaboration delay can be avoided.

8. The communication module 603 sends the distributed data to the communication module 607 on the electronic device 200.

The distributed data includes a type of the data object and an attribute value of the instance of the data object.

In some embodiments, step 8 may be performed immediately after step 4. The electronic device 100 prepares the distributed data object in advance, and immediately sends the distributed data object to the communication module 607 on the electronic device 200 after receiving the message indicating agreement to establish the collaboration connection. In this way, a time of the collaboration delay can be reduced.

9. After receiving the session ID, the communication module 607 sends the distributed data and the session ID to the JS programming framework 606 on the electronic device 200.

In some embodiments, the communication module 607 may separately send the distributed data and the session ID to the JS programming framework 606.

In some embodiments, the communication module 607 may simultaneously send the distributed data and the session ID to the JS programming framework 606.

In some embodiments, the communication module 607 may send the session ID to the JS programming framework 606 after step 4 and before step 9.

After receiving the distributed data, the JS programming framework 606 generates the distributed data object based on the attribute value of the instance of the data object.

After receiving the distributed data and the session ID, the JS programming framework 606 associates the instance of the data object with the session ID. Different instances are associated with different session IDs, so that session IDs associated with any two instances that are the same on the electronic device 100 and the electronic device 100 are the same. Data of two instances that are the same on the electronic device 100 and the electronic device 200 is consistent. In this way, after the data object of an instance 1 on the electronic device 100 changes, the instance 1 on the electronic device 200 also changes. Data synchronization is implemented when the electronic device 100 collaborates with the electronic device 200.

10. The JS programming framework 606 sends the distributed data object to the distributed in-memory database 608.

After the distributed in-memory database 608 receives the distributed data object, the distributed in-memory database 608 stores the distributed data object in the distributed in-memory database 608 in a key-value (key-value) form.

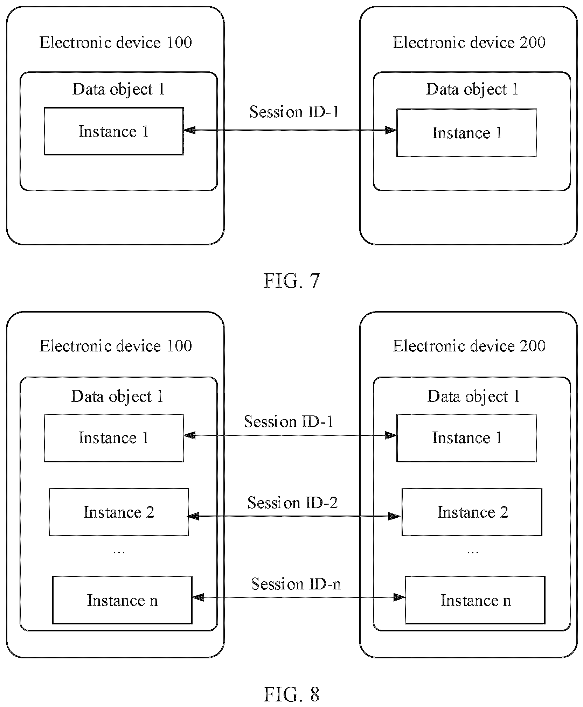

Specifically, FIG. 7 to FIG. 9 are example UI diagrams in which any two instances of a group of two collaboration devices are associated with a same session ID.

It should be noted that, there may be one or more types of data objects of distributed data sent by an electronic device 100 to the electronic device 200.

In some embodiments, data objects of a same type may also include instances of one type or more different types.

The electronic device 100 establishes a collaboration connection to the electronic device 200. The electronic device 100 creates a distributed data object based on a JS programming framework provided in this embodiment of this application by using a data object generated by an application 1. There may be one or more data types of the distributed data object.

For example, as shown in FIG. 7, when the distributed data object (a data object 1) has one data type, there is one instance of the data object 1. Alternatively, the data object 1 has a plurality of instances, but types of the different instances are not distinguished. In this case, there is also one instance of a distributed data object having a plurality of instances of different types. The electronic device 100 creates a session ID-1 by using the JS programming framework, and associates the session ID-1 with an instance 1. Then, the electronic device 100 sends an attribute value of the instance 1, a type of the data object, and the session ID-1 to the electronic device 200. After receiving the instance 1 and the type of the data object, the electronic device 200 generates a data object 1 based on the instance 1 and the type of the data object, and associates the instance 1 on the electronic device 200 with the session ID-1. In this way, in a case in which the distributed data object has one data type, the instance 1 on the electronic device 100 and an instance 2 on the electronic device 200 are associated with a same session ID (the session ID-1). In this way, after the data object of the instance 1 on the electronic device 100 changes, the data object of the instance 2 on the electronic device 200 also changes. Data synchronization is implemented when the electronic device 100 collaborates with the electronic device 200.

For example, as shown in FIG. 8, when the distributed data object (the data object 1) has one data type, and the data object 1 has a plurality of instances, and the instances of the distributed data object having the plurality of instances of different types need to be distinguished. In addition, the electronic device 100 creates a plurality of different session IDs by using the JS programming framework, and sends the plurality of different session IDs, attribute values of the different instances, and the type of the data object to the electronic device 200. After receiving the plurality of different session IDs, the attribute values of the different instances, and the type of data object, the electronic device 200 generates a data object 1 based on the attribute values of the different instances and the type of the data object, and associates an instance same as the instance on the electronic device 100 with a same session ID.

For example, as shown in FIG. 8, the data object 1 has n instance types. The electronic device 100 creates n different session IDs by using the JS programming framework, associates an instance 1 with a session ID-1, associates an instance 2 with a session ID-2, and associates an instance n with a session ID-n. Then, the electronic device 100 sends the plurality of different session IDs, attribute values of the different instances, and a type of the data object to the electronic device 200. The electronic device 100 generates a data object 1 based on an attribute value of the instance 1, an attribute value of the instance 2, and an attribute value of the instance n. Then, the electronic device 200 associates an instance 1 with the session ID-1, associates an instance 2 with the session ID-2, and associates an instance n with the session ID-n. In this way, when a same data object has n instance types, a same instance on the electronic device 100 and the electronic device 200 are associated with a same session ID.

In this way, after an attribute value of any instance on the electronic device 100 changes, an attribute value of an instance associated with a same session ID on the electronic device 200 also changes. For example, after the attribute value on the instance 1 of the electronic device 100 changes, an attribute value of the instance 1 on the electronic device 200 also changes. Data synchronization is implemented when the electronic device 100 collaborates with the electronic device 200.

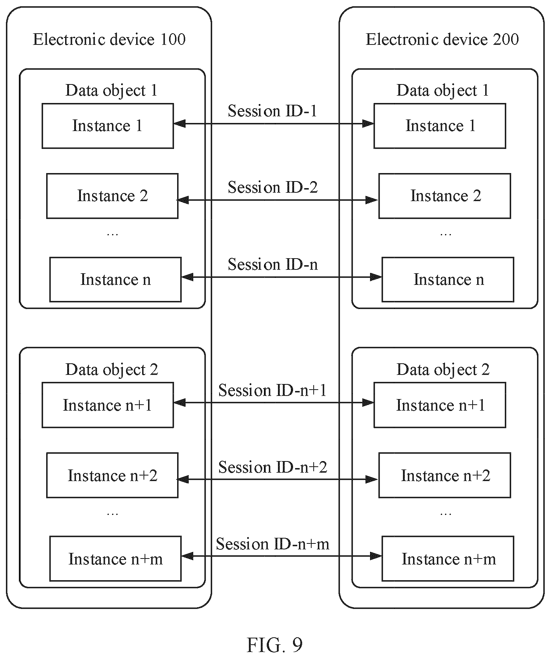

For example, as shown in FIG. 9, when a data object has a plurality of data types (greater than or equal to 2), a data object of each type has a plurality of instances. The electronic device 100 creates a plurality of different session IDs by using the JS programming framework, and sends the plurality of different session IDs, attribute values of the different instances, and the type of the data object to the electronic device 200. After receiving the plurality of different session IDs, the attribute values of the different instances, and the type of data object, the electronic device 200 generates a data object 1 based on the attribute values of the different instances and the type of the data object, and associates an instance same as the instance on the electronic device 100 with a same session ID.

For example, as shown in FIG. 9, there are n types of the instances of the data object 1. The electronic device 100 creates n different session IDs by using the JS programming framework, associates an instance 1 with a session ID-1, associates an instance 2 with a session ID-2, and associates an instance n with a session ID-n. Then, the electronic device 100 sends the plurality of different session IDs, attribute values of the different instances, and the type of the data object to the electronic device 200. The electronic device 200 generates a data object 1 based on the attribute value of the instance 1, the attribute value of the instance 2, and the attribute value of the instance n. Then, the electronic device 200 associates an instance 1 with the session ID-1, associates an instance 2 with the session ID-2, and associates an instance n with the session ID-n. In this way, when a same data object has n instance types, a same instance on the electronic device 100 and the electronic device 200 are associated with a same session ID.

There are m types of the instances of a data object 2. The electronic device 100 creates m different session IDs by using the JS programming framework, associates an instance n+1 with a session ID-n+1, associates an instance n+2 with a session ID-n+2, and associates an instance n+m with a session ID-n+m. Then, the electronic device 100 sends the plurality of different session IDs, attribute values of the different instances, and a type of the data object to the electronic device 200. The electronic device 200 generates a data object 2 based on an attribute value of the instance n+1, an attribute value of the instance n+2, and an attribute value of the instance n+m. Then, the electronic device 200 associates the instance n+1 with a session n+1, associates the instance n+2 with the session ID-n+2, and associates the instance n+m with the session ID-n+m.

In this way, when a data object has a plurality of data types, a same instance on the electronic device 100 and the electronic device 200 are associated with a same session ID. Data synchronization is implemented when the electronic device 100 collaborates with the electronic device 200.

FIG. 7 to FIG. 9 are example UI diagrams in which any two instances of two collaboration devices in a group are associated with a same session ID. In another embodiment, a plurality of devices (more than two devices) may simultaneously establish collaboration connections. When the plurality of devices simultaneously establish the collaboration connections, instances of any two of the plurality of devices may associate with a same session ID, to implement data synchronization.

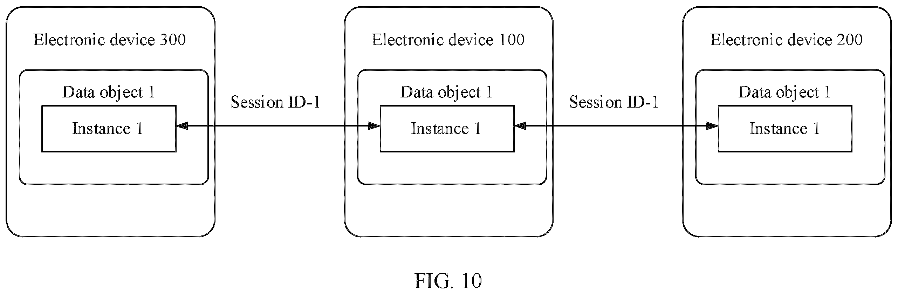

FIG. 10 to FIG. 12 are example UI diagrams in which any two instances of a plurality of collaboration devices in a group are associated with a same session ID.

In embodiments of this application, a principle of implementing data synchronization by associating instances with a same session ID when three devices (for example, the electronic device 100, the electronic device 200, and the electronic device 300) simultaneously establish the collaboration connections is described.

In some embodiments, an electronic device 300 may also be referred to as a third electronic device.

For example, as shown in FIG. 10, the electronic device 100 is a collaboration initiation device, and the electronic device 200 and the electronic device 300 are collaboration accepting devices.

When a data object (a data object 1) has one data type, and the data object also has one instance type, the electronic device 100 creates a session ID-1 by using the JS programming framework, and associates the session ID-1 with an instance 1. Then, the electronic device 100 sends an attribute value of the instance 1 and the session ID-1 to the electronic device 200 and the electronic device 300 separately.

After receiving the attribute value of the instance 1 and the session ID-1, the electronic device 200 generates a data object 1 based on the attribute value of the instance 1, and associates the instance 1 with the session ID-1. In this way, the instance 1 on the electronic device 100 and the instance 1 on the electronic device 200 are associated with a same session ID (the session ID-1).

Similarly, after receiving the attribute value of the instance 1 and the session ID-1, the electronic device 300 generates a data object 1 based on the attribute value of the instance 1, and associates the instance 1 with the session ID-1. In this way, the instance 1 on the electronic device 300 and the instance 1 on the electronic device 100 are associated with a same session ID (the session ID-1).

The instance 1 on the electronic device 100, the instance 1 on the electronic device 200, and the instance 1 on the electronic device 300 are associated with a same session ID.

In this way, after the data object of the instance of the electronic device 100 changes, a data object of an instance that is associated with a same session ID on the electronic device 200 and the electronic device 300 also changes. For example, after the data object of the instance 1 on the electronic device 100 changes, the data object of the instance 1 on the electronic device 200 and the data object of the instance 1 on the electronic device 300 also change. Data synchronization is implemented when the electronic device 100 collaborates with the electronic device 200 and the electronic device 300.

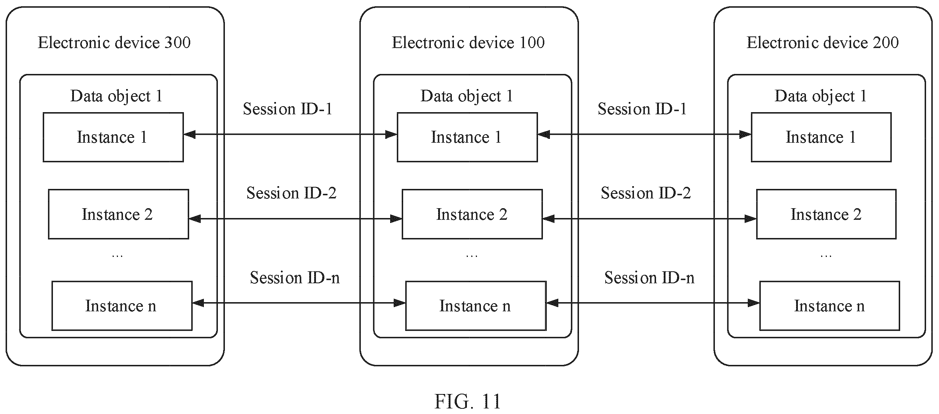

For example, as shown in FIG. 11, the electronic device 100 is a collaboration initiation device, and the electronic device 200 and the electronic device 300 are collaboration accepting devices.

A data object 1 has a plurality of instances. Instances of a distributed data object having the instances of different types need to be distinguished. In addition, the electronic device 100 creates a plurality of different session IDs by using the JS programming framework, and sends the plurality of different session IDs and attribute values of the different instances to the electronic device 200 and the electronic device 300. After receiving the plurality of different session IDs and the attribute values of the different instances, the electronic device 200 generates a data object 1 based on the attribute values of the different instances, and associates a same instance on the electronic device 200 with a same session ID. After receiving the plurality of different session IDs and the attribute values of the different instances, the electronic device 300 generates a data object 1 based on the attribute values of the different instances, and associates a same instance on the electronic device 300 with a same session ID.

For example, as shown in FIG. 11, there are n types of the instances of the data object 1. The electronic device 100 creates n different session IDs by using the JS programming framework, associates an instance 1 with a session ID-1, associates an instance 2 with a session ID-2, and associates an instance n with a session ID-n. Then, the electronic device 100 sends the plurality of different session IDs and attribute values of the different instances to the electronic device 200 and the electronic device 300. The electronic device 200 generates a data object 1 based on the attribute value of the instance 1, the attribute value of the instance 2, and the attribute value of the instance n. Then, the electronic device 200 associates an instance 1 with the session ID-1, associates an instance 2 with the session ID-2, and associates an instance n with the session ID-n.

Similarly, the electronic device 300 generates a data object 1 based on the attribute value of the instance 1, the attribute value of the instance 2, and the attribute value of the instance n. Then, the electronic device 300 associates an instance 1 with the session ID-1, associates an instance 2 with the session ID-2, and associates an instance n with the session ID-n.

In this way, when a same data object has n instance types, a same instance on the electronic device 100, the electronic device 200, and the electronic device 300 are associated with a same session ID. In this way, after a data object of any instance of the electronic device 100 changes, a data object of an instance that is associated with a same session ID on the electronic device 200 and the electronic device 300 also changes. For example, after the data object of the instance 1 on the electronic device 100 changes, the data object of the instance 1 on the electronic device 200 and the data object of the instance 1 on the electronic device 300 also change. Data synchronization is implemented when the electronic device 100 collaborates with the electronic device 200 and the electronic device 300.

It should be noted that, embodiments of this application are not limited to a case in which two or three devices simultaneously establish collaboration connections, more devices may simultaneously establish collaboration connections, and a quantity of devices that simultaneously establish collaboration connections is not limited in embodiments of this application.

In some embodiments, when the electronic device 100 establishes collaboration connections to a plurality of other devices, the electronic device 100 may send data objects of different types to different collaboration devices.

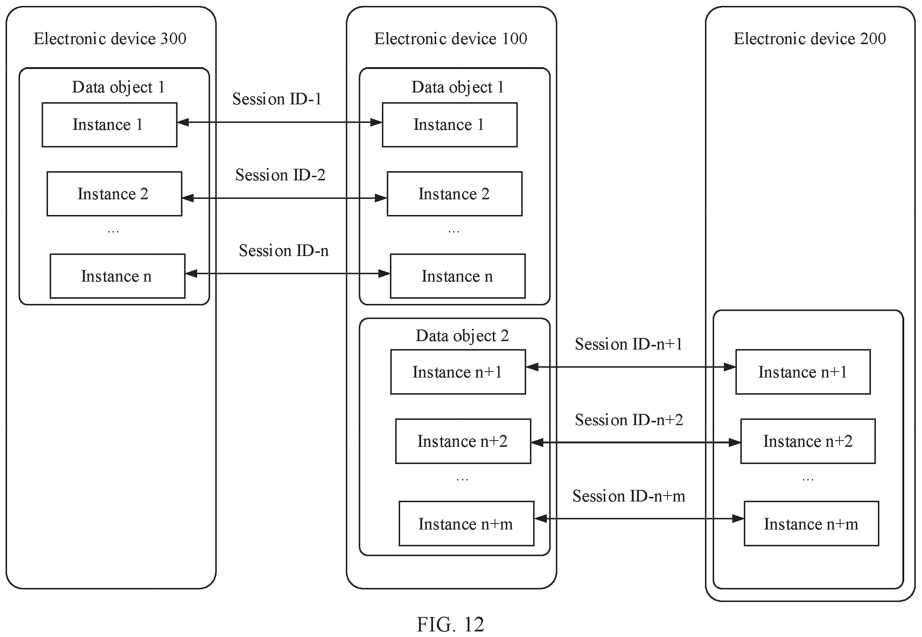

For example, as shown in FIG. 12, the electronic device 100 is a collaboration initiation device, and the electronic device 200 and the electronic device 300 are collaboration accepting devices.

A data object 1 has a plurality of instances. Instances of a distributed data object having the instances of different types need to be distinguished. In addition, the electronic device 100 creates a plurality of different session IDs by using the JS programming framework, and sends a plurality of different session IDs and attribute values of the different instances to the electronic device 200. After receiving the plurality of different session IDs and the attribute values of the different instances, the electronic device 200 generates a data object 1 based on the attribute values of the different instances, and associates a same instance on the electronic device 200 with a same session ID. After receiving the plurality of different session IDs and the attribute values of the different instances, the electronic device 300 generates a data object 1 based on the attribute values of the different instances, and associates a same instance on the electronic device 300 with a same session ID.

For example, as shown in FIG. 12, the electronic device 100 collaborates with the electronic device 300 based on a data object 1. There are n types of the instances of the data object 1. The electronic device 100 creates n different session IDs by using the JS programming framework, associates an instance 1 with a session ID-1, associates an instance 2 with a session ID-2, and associates an instance n with a session ID-n. Then, the electronic device 100 sends the plurality of different session IDs and attribute values of the different instances to the electronic device 300. The electronic device 300 generates the data object 1 based on the attribute value of the instance 1, the attribute value of the instance 2, and the attribute value of the instance n. Then, the electronic device 300 associates an instance 1 with the session ID-1, associates an instance 2 with the session ID-2, and associates an instance n with the session ID-n.

For example, as shown in FIG. 12, the electronic device 100 collaborates with the electronic device 200 based on a data object 2. There are m types of the instances of the data object 2. The electronic device 100 creates m different session IDs by using the JS programming framework, associates an instance n+1 with a session ID-n+1, associates an instance n+2 with a session ID-n+2, and associates an instance n+m with a session ID-n+m. Then, the electronic device 100 sends the plurality of different session IDs and the attribute values of the different instances to the electronic device 200. The electronic device 200 generates a data object 2 based on an attribute value of the instance n+1, an attribute value of the instance n+2, and an attribute value of the instance n+m. Then, the electronic device 200 associates the instance n+1 with a session ID- n+1, associates the instance n+2 with the session ID- n+2, and associates an instance n+m with the session ID-n+m.

11. The distributed in-memory database 608 sends the distributed data object to the application 605 on the electronic device 200.

After the application 605 receives the distributed data object, the application 605 outputs the distributed data object, and the electronic device 200 begins collaboration with the electronic device 100.

In some embodiments, when there are a plurality of (for example, three) devices that simultaneously establish collaboration connections, for example, when the electronic device 100 establishes the collaboration connection to the electronic device 200, the electronic device 100 further establishes the collaboration connection to the electronic device 300, for how the electronic device 300 performs collaboration interaction with the electronic device 100, refer to how the electronic device 200 performs collaboration interaction with the electronic device 100 shown in FIG. 6. A principle is similar. Details are not described herein in embodiments of this application.

After an application on the electronic device 300 obtains the distributed data object sent by the electronic device 100, the electronic device 300 may output the distributed data object, and the electronic device 300 starts to collaborate with the electronic device 100. The electronic device 100, the electronic device 200, and the electronic device 300 simultaneously establish the collaboration connections.

It should be noted that the session identifiers, for example, the session ID- 1, the session ID- 2, ..., the session ID- n, session ID- n+1, the session ID- n+2, ..., and the session ID- n+m, are different from each other, and the session identifiers are merely used to indicate that different instances are associated with different session identifiers. In another embodiment, the session identifiers may also be other representation forms. This is not limited in embodiments of this application.

It should be noted that some steps in step 1 to step 10 may be deleted or replaced. Alternatively, some steps in step 1 to step 10 may be executed before or after another step, or the like. The execution sequence of step 1 to step 10 shown in FIG. 6 is merely an example diagram for describing collaboration between the electronic device 100 and the electronic device 200, and should not constitute a limitation.

**The foregoing embodiments describes a process of implementing collaboration between devices. After the device establishes the collaboration connection, a data object on the application 1 may change (for example, an attribute value of an instance in the data object is updated). In this case, an attribute value of a corresponding instance on the electronic device 200 may also change, to implement data synchronization between collaboration devices. The following describes a specific implementation of implementing data synchronization between collaboration devices.**

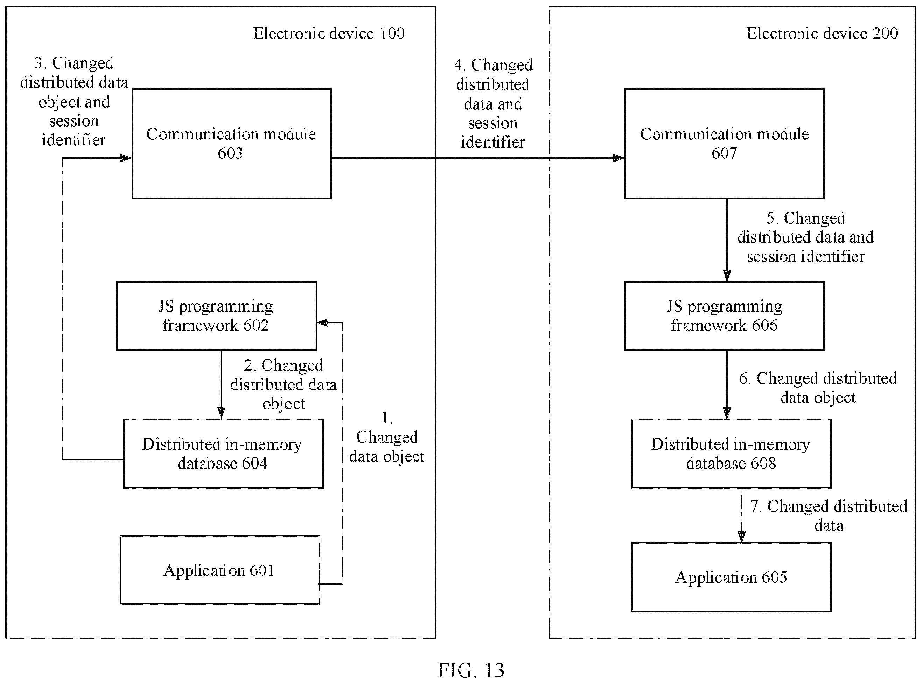

**FIG. 13** **is a diagram of implementing data synchronization between collaboration devices.**

Data synchronization between the collaboration devices mainly includes the following steps.
1. An application 601 sends changed data object to a JS programming framework 602.

Compared with a before-change data object, a type of changed data object does not change, but an attribute value of an instance of the data object changes. For example, for a data object 1, an attribute value of an instance 1 of a before-change data object is a first value, and an attribute value of the instance 1 of changed data object is a second value.
2. The JS programming framework 602 wraps the changed data object into a changed distributed data object through data interception, and stores the changed distributed data object in a distributed in-memory database 604 in a key-value (key-value) form.
3. The distributed in-memory database 604 sends the changed distributed data object and a session identifier corresponding to the changed distributed data object to a communication module 603.
4. The communication module 603 sends the changed distributed data and the session identifier corresponding to the changed distributed data object to a communication module 607.

The changed distributed data includes a changed attribute value of the instance and the type of the data object.

The distributed in-memory database 604 listens to an instance attribute of the distributed data object, monitors whether the instance attribute of the distributed data object changes, and if the instance attribute of the distributed data object changes, the distributed in-memory database 604 sends the changed distributed data object and the session identifier corresponding to the changed distributed data object to the communication module 603.

The distributed in-memory database 604 sends the changed distributed data object to the communication module 603, so that the communication module 603 sends the changed distributed data object to an electronic device 200. Then the electronic device 200 updates a distributed data object.

The distributed in-memory database 604 sends the session identifier corresponding to the changed distributed data object to the communication module 603, so that the communication module 603 sends the session identifier corresponding to the changed distributed data object to the electronic device 200. Then, the electronic device 200 determines, based on the received session identifier, an instance identifier associated with the received session identifier on the electronic device 200, and replaces an attribute value of an instance corresponding to the instance identifier with the changed attribute value. The electronic device 200 generates a changed distributed data object based on the changed attribute value of the instance.

In some embodiments, the foregoing step 3 may also be replaced with the following step:
The distributed in-memory database 604 sends the changed distributed data object and the instance identifier to the communication module 603.

In some embodiments, the foregoing step 4 may also be replaced with the following step:
The communication module 603 sends the changed distributed data and the instance identifier to the communication module 607.

The communication module 603 sends the instance identifier to the electronic device 200. The electronic device 200 may also determine an instance on the electronic device 200 based on the instance identifier, and replace an attribute value of the instance with the changed attribute value. The electronic device 200 generates the changed distributed data object based on the changed attribute value of the instance.

5. After receiving the changed distributed data, the communication module 607 sends the changed distributed data and the session identifier to a JS programming framework 606 on the electronic device 200.

In some embodiments, the communication module 607 may separately send the changed distributed data and the session identifier (session ID) to the JS programming framework 606.

In some embodiments, the communication module 607 may simultaneously send the distributed data and the session ID to the JS programming framework 606.

After the JS programming framework 606 receives the changed distributed data, the JS programming framework 606 generates the changed distributed data object based on the changed attribute value of the instance.

Specifically, after the JS programming framework 606 receives the changed distributed data object and the session ID, the JS programming framework 606 determines an instance identifier associated with the received session ID, and replaces an attribute value of an instance corresponding to the instance identifier with the changed attribute value. The JS programming framework 606 generates the changed distributed data object based on the changed attribute value of the instance.

6. The JS programming framework 606 sends the changed distributed data object to a distributed in-memory database 608.

After the distributed in-memory database 608 receives the changed distributed data object, the distributed in-memory database 608 locally stores the changed distributed data object in a key-value (key-value) form.

7. The distributed in-memory database 608 sends the changed distributed data object to an application 605.

After the application 605 receives the changed distributed data object, the application 605 may output the changed distributed data object.

In this way, after a data object on the electronic device 100 changes, a data object on the electronic device 200 also changes accordingly. In this way, data synchronization between the devices is implemented.

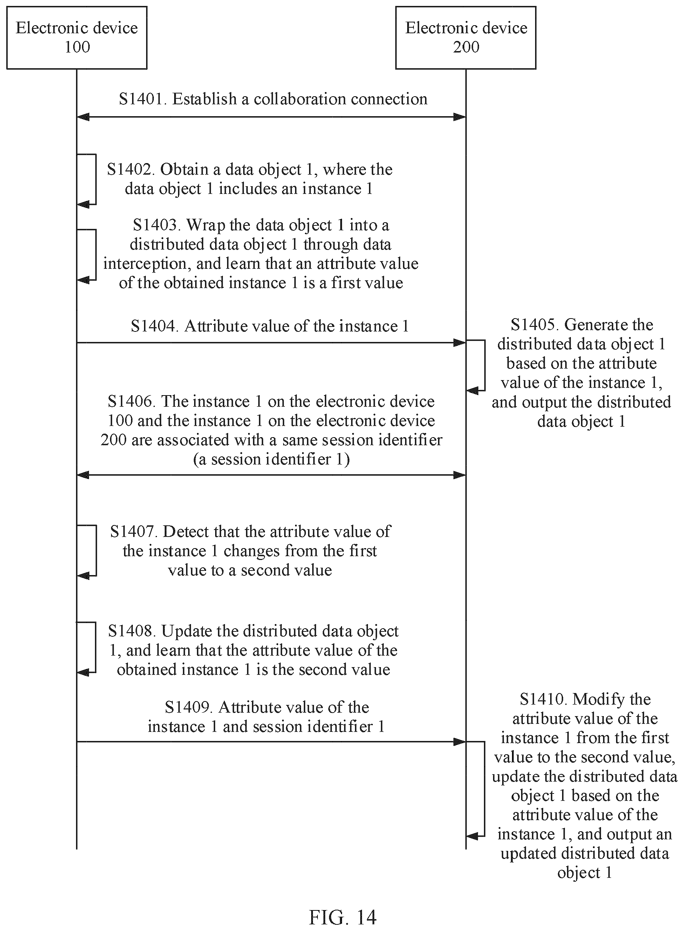

**FIG. 14** **is an example schematic flowchart of a device collaboration method according to an embodiment of this application.**

S1401. An electronic device 100 establishes a collaboration connection to an electronic device 200.

The electronic device 100 is a collaboration initiation device. The electronic device 200 is a collaboration accepting device.

The electronic device 100 may establish the collaboration connection to the electronic device 200 in any one of the following manners.

Manner 1: The electronic device 100 and the electronic device 200 are connected to a same network. For example, the electronic device 100 and the electronic device 200 may be connected to a same local area network to establish the collaboration connection.

Manner 2: A same system account is used to log in to the electronic device 100 and the electronic device 200, to establish the collaboration connection. For example, the system account used to log in to the plurality of electronic devices may be "HW1234".

Manner 3: System accounts used to log in to the electronic device 100 and the electronic device 200 may both belong to a same account group. For example, the system accounts used to log in to the electronic device 100 and the electronic device 200 include "HW001" and "HW002". The system accounts "HW001" and "HW002" belong to an account group "Huawei Home".

Manner 4: The electronic device 100 may establish the collaboration connection to the electronic device 200 in a manner like near field communication (Near Field Communication, NFC), Bluetooth (bluetooth, BT), a wireless local area network (wireless local area network, WLAN) like wireless fidelity point to point (wireless fidelity point to point, Wi-Fi P2P), or an infrared (infrared, IR) technology.

Manner 5: The electronic device 100 and the electronic device 200 may establish a temporary account group by scanning a same two-dimensional barcode, to establish the collaboration connection for communication.

In addition to the foregoing five manners, the electronic device 100 may alternatively establish the collaboration connection to the electronic device 200 in another manner. This is not limited in embodiments of this application.

In addition, the electronic device 100 and the electronic device 200 may alternatively be connected and communicate with each other according to a combination of any quantity of the foregoing manners. This is not limited in embodiments of this application.

1402. The electronic device 100 obtains a data object 1, where the data object 1 includes an instance 1, and an attribute value of the instance 1 is a first value.

In some embodiments, the data object 1 may also be referred to as a first data object, the instance 1 may also be referred to as a first instance, and the first value of an attribute value of the instance 1 may also be referred to as a first instance attribute.

The electronic device 100 starts an application 1, and obtains the data object 1 of the instance 1, where the data object 1 includes the instance 1, and the attribute value of the instance 1 is the first value.

It can be learned from the foregoing embodiments that the application 1 may have a plurality of types of data objects, and a data object of each type may have a plurality of instance types. This is not limited in embodiments of this application.

The electronic device 100 creates a distributed data object through data interception. The electronic device 100 may monitor an instance attribute value of the distributed data object, and send only a changed instance attribute value to the electronic device 200. In this way, an amount of transmitted data is reduced and device collaboration efficiency is improved.

For example, the data object 1 includes an instance 1 and an instance 2, and the electronic device 100 may monitor attribute values of the instance 1 and the instance 2. When the electronic device 100 detects that an attribute value of the instance 2 changes, and the attribute value of the instance 1 does not change, the electronic device 100 may send only a changed attribute value of the instance 2 to the electronic device 200, and does not need to send the attribute value of the instance 1 to the electronic device 100. In this way, an amount of data transmitted between the collaboration devices is reduced, and device collaboration efficiency is improved.

In some embodiments, the instance 2 may also be referred to as a third instance, and the attribute value of the instance 2 may also be referred to as a third instance attribute.

In some embodiments, the electronic device 100 obtains a data object 1 and a data object 2. The data object 1 includes an instance 1 and an instance 2, and the data object 2 includes an instance 3 and an instance 4. The electronic device 100 may monitor a change of an instance attribute value of the data object 1 and an instance attribute value of the data object 2. When the electronic device 100 detects that an attribute value of the instance 3 changes, and the attribute value of the instance 1 does not change, the electronic device 100 may send only the data object 2 (the instance 3 and the instance 4) to the electronic device 200, and does not need to send the data object 1 and the data object 2 to the electronic device 200. Only changed data objects (the instance 3 and the instance 4) are sent to the electronic device 200. In this way, compared with a manner in which the electronic device 100 sends all data objects to the electronic device 200, an amount of data transmitted between the collaboration devices can be reduced.

In some embodiments, the data object 2 may also be referred to as a second data object, the instance 3 may also be referred to as a second instance, and the attribute value of the instance 3 may also be referred to as a second instance attribute.

1403. The electronic device 100 wraps the data object 1 into a distributed data object 1 through data interception, and learns that the attribute value of the obtained instance 1 is a first value.

The electronic device 100 obtains the attribute value of the instance 1 through data interception. In this way, through data interception, whether the attribute value of the instance 1 changes can be monitored, and update to the changed attribute value of the instance 1 can be performed in a timely manner. This ensures data consistency between the collaboration devices.

In some embodiments, the electronic device 100 obtains the attribute value of the instance 2 through data interception. In this way, through data interception, whether the attribute value of the instance 2 changes can be monitored, and update to the changed attribute value of the instance 2 can be performed in a timely manner. This ensures data consistency between the collaboration devices.

For example, the following shows a specific implementation of an interface for creating a distributed data object.

```
         var obj=distributed({
             title: 'Title',
           desc: 'Description'
          })
```

It should be noted that, in another embodiment, a name of the interface for creating a distributed data object may change, but a principle is similar. This is not limited in this embodiment of this application.

After the electronic device 100 wraps the data object 1 into the distributed data object 1 through data interception, the electronic device 100 further needs to store the distributed data object 1 into a distributed database in a key-value (key-value) form. For details, refer to related descriptions in Table 1. Details are not described in this embodiment of this application again.

After the electronic device 100 creates the distributed data object 1, the electronic device 100 may further access the distributed data object.

For example, the following shows a specific implementation of an interface for accessing a distributed data object.
console.info(obj.title)

It should be noted that, in another embodiment, a name of the interface for accessing a distributed data object may change, but a principle is similar. This is not limited in this embodiment of this application.

1404. The electronic device 100 sends the attribute value of the instance 1 to the electronic device 200.

In some embodiments, the electronic device 100 further obtains an instance 3 of the data object 2, and the electronic device 100 sends an attribute value of the instance 3 to the electronic device 200.

In some embodiments, sending the attribute value of the instance 1 by the electronic device 100 to the electronic device 200 may also be referred to as sending the attribute value of the instance 1 by the electronic device 100 to the electronic device 200 through a first session. A session identifier of the first session is a first session identifier. The instance 1 is associated with the session identifier of the first session.

In some embodiments, the electronic device 100 establishes a collaboration connection to the electronic device 200, and the electronic device 100 sends a collaboration message to the electronic device 200. The collaboration message includes an instance identifier of the instance 1 and the session identifier of the first session. The session identifier of the first session is associated with the instance 1. In this way, the electronic device 100 associates the instance 1 with the session identifier of the first session, so that after receiving the session identifier of the first session, the electronic device 200 associates the instance 1 on the electronic device 200 with the session identifier of the first session. In this way, a same session identifier is associated with two instances that are the same on the electronic device 100 and the electronic device 200. This ensures consistency of attributes of the two instances that are the same on the electronic device 100 and the electronic device 200, and ensures consistency of collaboration data.

In some embodiments, sending the attribute value of the instance 3 by the electronic device 100 to the electronic device 200 may also be referred to as sending the attribute value of the instance 3 by the electronic device 100 to the electronic device 200 through a second session. A session identifier of the second session is a second session identifier. The instance 3 is associated with the session identifier of the second session.

The electronic device 100 sends different types of instances to the electronic device 200 through different sessions. Instances that are the same on the electronic device 100 and the electronic device 200 are associated with a same session identifier. In other words, both the instance 1 on the electronic device 100 and the instance 1 on the electronic device 200 are associated with the first session identifier, and both the instance 3 on the electronic device 100 and the instance 3 on the electronic device 200 are associated with the second session identifier.

In some embodiments, the electronic device 100 further obtains the instance 2 of the data object 1, and the electronic device 100 sends the attribute value of the instance 2 to the electronic device 200 through the first session. The electronic device 200 generates the distributed data object 1 based on the attribute value of the instance 1 and the attribute value of the instance 2. In this way, when the data object 1 includes instances of two types, the electronic device 100 sends both the instance 1 and the instance 2 to the electronic device 200 through the first session. In other words, data objects that are the same on the electronic device 100 and the electronic device 200 are associated with a same session identifier, and instances of different types included in a data object of a same type are not distinguished. When the attribute of the data object 1 on the electronic device 100 changes, the electronic device 100 sends the changed data object 1 to the electronic device 200.

In some embodiments, the electronic device 100 further obtains the instance 2 of the data object 1, and the electronic device 100 sends the attribute value of the instance 2 to the electronic device 200 through the third session. The electronic device 200 generates the distributed data object 1 based on the attribute value of the instance 1 and the attribute value of the instance 2. In this way, when the data object 1 includes instances of two types, the electronic device 100 separately sends the instance 1 and the instance 2 to the electronic device 200 through the different sessions. In other words, two instances that are the same on the electronic device 100 and the electronic device 200 are associated with a same session identifier, and instances of different types included in a data object of a same type are distinguished. When the attribute of the instance 1 on the electronic device 100 changes, the electronic device 100 sends only the changed attribute of the instance 1 to the electronic device 200, and does not need to send the attribute value of the instance 2. This reduces an amount of data transmitted between the collaboration devices, and improves collaboration efficiency.

In some embodiments, the first electronic device establishes collaboration connections to the second electronic device and a third electronic device. The first electronic device sends a first instance attribute to the third electronic device through a fourth session, and sends a second instance attribute to the third electronic device through a fifth session, where the first instance attribute is used by the third electronic device to generate a first data object, and the second instance attribute is used by the third electronic device to generate a second data object.

A session identifier of the fourth session is a fourth session identifier, and a session identifier of the fifth session is a fifth session identifier. The fourth session identifier may be the session ID-1 shown in FIG. 11, and the fifth session identifier may be the session ID-n shown in FIG. 11. For details, refer to related descriptions in FIG. 11.

Sending the first instance attribute, by the first electronic device, to the third electronic device through the fourth session, and sending the second instance attribute to the third electronic device through the fifth session may be understood as associating, by the first electronic device, the first instance on the first electronic device with the fourth session identifier, and associating, by the first electronic device, the second instance on the first electronic device with the fifth session identifier. The first electronic device sends an identifier of the first instance and the fourth session identifier to the third electronic device, and the first electronic device sends an identifier of the second instance and the fifth session identifier to the third electronic device. The third electronic device associates a first instance on the third electronic device with the fourth session identifier. The third electronic device associates a second instance on the third electronic device with the fifth session identifier. In other words, both the first instance on the first electronic device and the first instance on the third electronic device are associated with the fourth session identifier, and both the second instance on the first electronic device and the second instance on the third electronic device are associated with the fifth session identifier.

In this way, the three electronic devices may simultaneously establish the collaboration connections, and attributes of same instances on a plurality of devices are also the same. This ensures consistency of collaboration data.

In some embodiments, the first electronic device establishes collaboration connections to the second electronic device and the third electronic device. The first electronic device generates a third data object. The first electronic device obtains a fourth instance attribute of the third data object. The first electronic device sends the fourth instance attribute to the third electronic device through a sixth session, where the fourth instance attribute is used by the third electronic device to generate the third data object.

A session identifier of the sixth session is a sixth session identifier. The sixth session identifier may be any one of the session ID-n+1, the session ID-n+2, ..., and the session ID-n+m shown in FIG. 12. The fourth instance attribute may be any one of the instance n+1, the instance n+2, ..., and the instance n+m shown in FIG. 12. For details, refer to related descriptions in FIG. 12.

Sending the fourth instance attribute by the first electronic device to the third electronic device through the sixth session may be understood as associating, by the first electronic device, the fourth instance on the first electronic device with the sixth session identifier. Then the first electronic device sends the identifier of the fourth instance and the sixth session identifier to the third electronic device. The third electronic device associates a fourth instance on the third electronic device with the sixth session identifier. In other words, both the fourth instance on the first electronic device and the fourth instance on the third electronic device are associated with the sixth session identifier.

In this way, when the first electronic device establishes collaboration connections to a plurality of different electronic devices, the first electronic device may simultaneously transmit different collaboration data to the plurality of different electronic devices. This improves diversity of device collaboration functions.

1405. The electronic device 200 generates the distributed data object 1 based on the attribute value of the instance 1 and outputs the distributed data object 1.

After receiving the attribute value of the instance 1, the electronic device 100 generates the distributed data object 1 based on the attribute value of the instance 1, and outputs the distributed data object 1.

After the electronic device 200 generates the distributed data object 1, the electronic device 200 further needs to store the distributed data object 1 into the distributed database in a key-value (key-value) form. For details, refer to related descriptions in Table 1. Details are not described in this embodiment of this application again.

After the electronic device 100 performs data collaboration with the electronic device 200, the electronic device 100 may further monitor a status of data collaboration with the electronic device 200, and the electronic device 200 may also monitor the status of data collaboration with the electronic device 100.

The data collaboration status includes data collaboration success and data collaboration failure. Data collaboration may fail because the electronic device 100 is disconnected from the electronic device 200, or data collaboration fails because a format of the distributed data object stored on the electronic device 100 is different from a format of the distributed data object stored on the electronic device 200.

For example, the following shows a specific implementation of an interface for monitoring data coordination failure.
obj.on('sync-failer',(changedKeys: Array[string])=>{})

It should be noted that, in another embodiment, a name of the interface for monitoring data collaboration failure may change, but a principle is similar. This is not limited in this embodiment of this application.

1406. The electronic device 100 associates the instance 1 on the electronic device 100 and the instance 1 on the electronic device 200 with a same session identifier (a session identifier 1).

In some embodiments, the session identifier 1 may also be referred to as the first session identifier, and the first session identifier is the session identifier of the first session.

In this way, two instances that are the same on the electronic device 100 and the electronic device 200 are bound to a same session identifier, and data of the two instances that are the same on the electronic device 100 and the electronic device 200 is consistent.

After the data of the instance 1 on the electronic device 100 changes, the data of the instance 1 on the electronic device 200 also changes correspondingly.

For specific implementation of how the electronic device 100 and the electronic device 200 associate the two instances that are the same with a same session ID, refer to specific descriptions in FIG. 7 to FIG. 12. Details are not described in this embodiment of this application again.

For example, the following shows a specific implementation of an interface for initiating collaboration.

```
session ID=genSession ID ();
         j.setSession ID (session ID)
```

A specific implementation of an interface for sending a session identifier by the electronic device 100 to the electronic device 200 is shown.

For example, the following shows a specific implementation of an interface for accepting collaboration.
j.setSession ID (session ID)

The electronic device 200 parses and obtains the session identifier sent by the electronic device 200, and associates the instance 1 on the electronic device 200 with the same session identifier (the session identifier 1) associated with the instance 1 on the electronic device 100, so that the data of the two instances that are the same on the electronic device 100 and the electronic device 200 is consistent.

It should be noted that, in another embodiment, a name of the interface for initiating collaboration and a name of the interface for accepting collaboration may change, but principles are similar. This is not limited in this embodiment of this application.

1407. The electronic device 100 detects that the attribute value of the instance 1 changes from the first value to the second value.

In some embodiments, the second value of the instance 1 may also be referred to as a changed first instance attribute.

For example, the following shows a specific implementation of an interface for monitoring a data object change.
obj.on('change',(changedKeys: Array[string])=>{})

It should be noted that, in another embodiment, a name of the interface for monitoring a data object change may change, but a principle is similar. This is not limited in this embodiment of this application.

1408. The electronic device 100 updates the distributed data object 1, and learns that the attribute value of the obtained instance 1 is the second value.

A type of an updated distributed data object 1 remains unchanged, and only an attribute value of an instance on the updated distributed data object 1 changes.

For example, the data object 1 may be audio navigation information, and the first value of the attribute value of the instance 1 may be audio content "Remaining distance is 5 kilometers". The second value of the attribute value of the instance 1 may be audio content "Remaining distance is 3 kilometers".

After the electronic device 100 updates the distributed data object 1, the electronic device 100 further needs to store the updated distributed data object 1 into the distributed database in a key-value (key-value) form. For details, refer to related descriptions in Table 1. Details are not described in this embodiment of this application again.

In some embodiments, the electronic device 100 may store both the distributed data object 1 and the updated distributed data object 1 in the distributed database, or the electronic device 100 may store only the updated distributed data object 1 and delete the distributed data object 1.

1409. The electronic device 100 sends the attribute value of the instance 1 and the session identifier 1 to the electronic device 200.

In some embodiments, sending the attribute value of the instance 1 and the session identifier 1 by the electronic device 100 to the electronic device 200 may also be referred to as sending the changed attribute value of the instance 1 by the electronic device 100 to the second electronic device 200 through the first session. In this way, the first electronic device sends only the changed instance attribute to the second electronic device, and does not need to send the unchanged instance attribute. In this case, an amount of data transmitted between the collaboration devices is reduced, and collaboration efficiency is improved.

The electronic device 100 sends the attribute value (second value) of the instance 1 to the electronic device 200, so that the electronic device 200 updates the distributed data object 1 based on the attribute value (second value) of the instance 1.

The electronic device 100 sends the session identifier 1 to the electronic device 200, so that the electronic device 200 determines, based on the received session identifier 1, an instance identifier (an identifier of the instance 1) that is on the electronic device 200 and that is associated with the session identifier 1, changes an attribute value of the instance 1 on the electronic device 200 from the first value to the second value, and updates the distributed data object 1 based on the attribute value of the instance 1.

1410. The electronic device 200 modifies the attribute value of the instance 1 from the first value to the second value, updates the distributed data object 1 based on the attribute value of the instance 1, and outputs an updated distributed data object 1.

The electronic device 200 modifies the attribute value of the instance 1 from the first value to the second value, updates the distributed data object 1 based on the attribute value of the instance 1, and outputs the updated distributed data object 1.

The electronic device 200 further needs to store the updated distributed data object 1 into the distributed database in a key-value (key-value) form. For details, refer to related descriptions in Table 1. Details are not described in this embodiment of this application again.

In some embodiments, the electronic device 200 may store both the distributed data object 1 and the updated distributed data object 1 in the distributed database, or the electronic device 200 may store only the updated distributed data object 1 and delete the distributed data object 1.

For example, the following shows a specific implementation of an interface for updating a distributed data object.
Obj.title="New Title"

It should be noted that, in another embodiment, a name of the interface for updating a distributed data object may change, but a principle is similar. This is not limited in this embodiment of this application.

The following describes, by using an example, an application scenario provided by a device collaboration method provided in embodiments of this application.

For example, the electronic device 100 is a mobile phone, and the electronic device 200 is a smartwatch. When it is inconvenient for a user to use the mobile phone for navigation during cycling, the mobile phone cannot process navigation information. When the mobile phone and the smartwatch are in a same distributed network, the mobile phone may seamlessly switch map information for navigation on the mobile phone to the smartwatch with one tap, and then the smartwatch continues to display the navigation information. In this way, the user can view the navigation information during cycling.

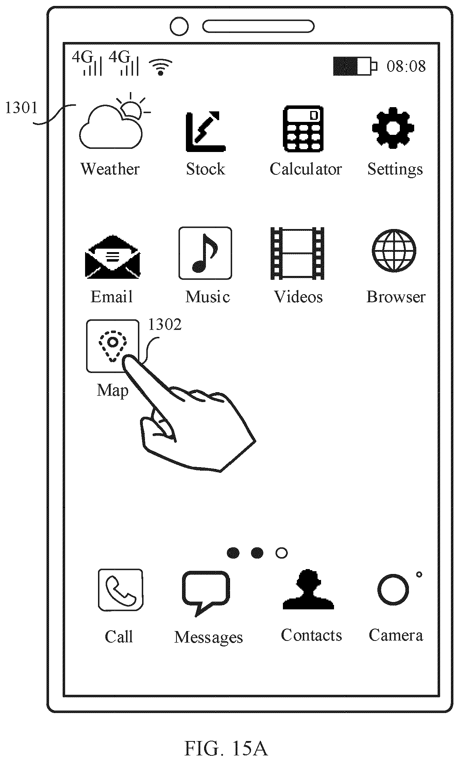

For example, as shown in FIG. 15A, the electronic device 100 may display an interface 1301 of a home screen. The interface 1301 displays a page on which application icons are placed, and the page includes a plurality of application icons (for example, a weather application icon, a stock application icon, a calculator application icon, a settings application icon, an Email application icon, a music application icon, a video application icon, a browser application icon, and a map application icon 1302). A page indicator is further displayed below the plurality of application icons, to indicate a location relationship between a currently displayed page and another page. There are a plurality of tray icons (for example, a dial application icon, an SMS message application icon, a contact application icon, and a camera application icon) below the page indicator, and the tray icons remain displayed during page switching.

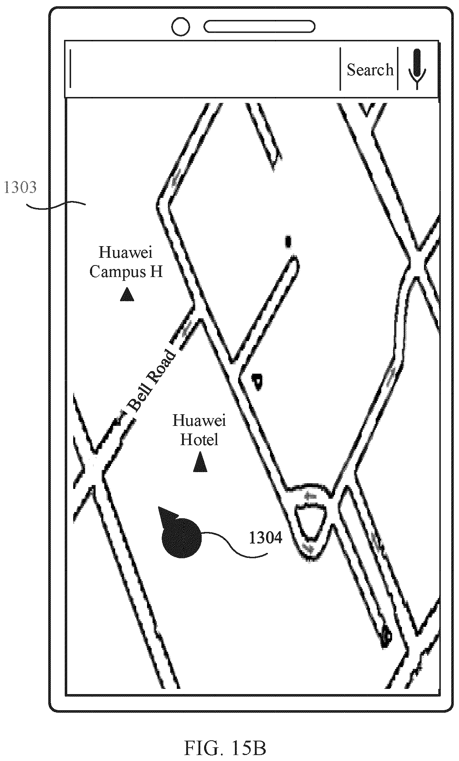

The electronic device 100 may receive an input operation (for example, one tap) performed by the user on the map application icon 1302. In response to the input operation, the electronic device 100 may respond to the input operation, and the electronic device 100 may display a map application interface 1303 shown in FIG. 15B.

As shown in FIG. 15B, the electronic device 100 displays the map application interface 1303. The map application interface 1303 includes a map 1304 and a search box. The map 1304 displays map information of an ambient environment of a current location of the user. The search box may be used to receive a destination name entered by the user.

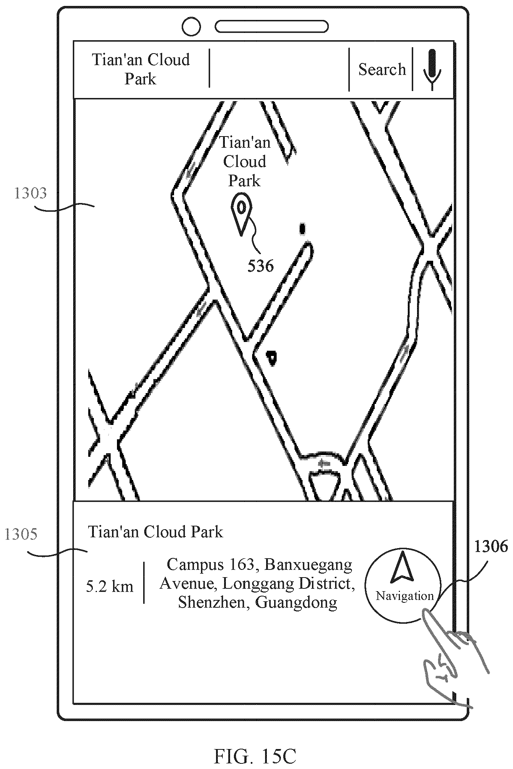

As shown in FIG. 15C, the electronic device 100 may receive a destination name (for example, "Tian'an Cloud Park") entered by the user in the destination search box. In response to the input operation, the electronic device 100 may display a window 1305. The window 1305 may include a distance (for example, 5.2 km) between the current geographical location of the electronic device 100 and the destination, destination address information ("Campus 163, Banxuegang Avenue, Longgang District, Shenzhen, Guangdong"), and a "Navigation" control 1306.

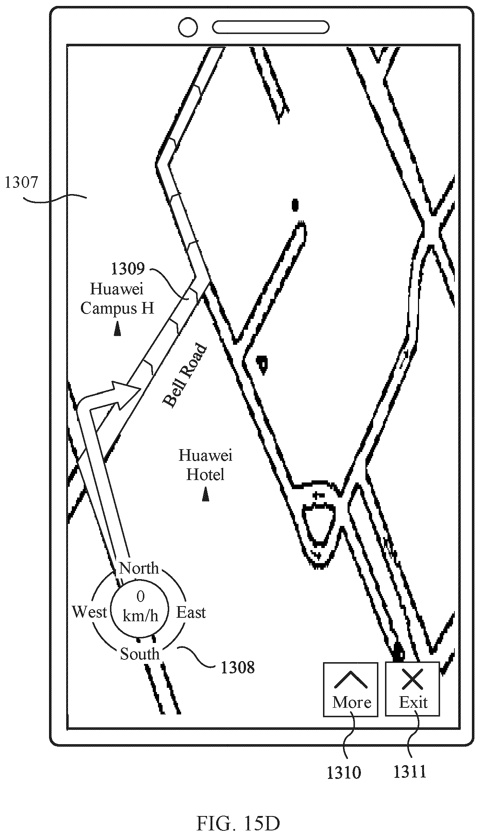

The electronic device 100 may receive an input operation (for example, one tap) of the user on the navigation control 1306. In response to the input operation, the electronic device 100 may enable navigation, obtain, from a map server, information about a route from the current location of the electronic device 100 to the destination, and display an interface 1307 shown in FIG. 15D in full screen.

As shown in FIG. 15D, the interface 1307 may include a map, a location marker 1308, a driving route 1309 from the current location of the electronic device 100 to the destination, a "More" control 1310, and an "Exit" control 1311. The location marker 1308 may indicate the current location of the electronic device 100 on the map. The "More" control 1310 may be configured to trigger display of more other function controls. The "Exit" control 1311 may be configured to trigger the electronic device 100 to exit navigation.

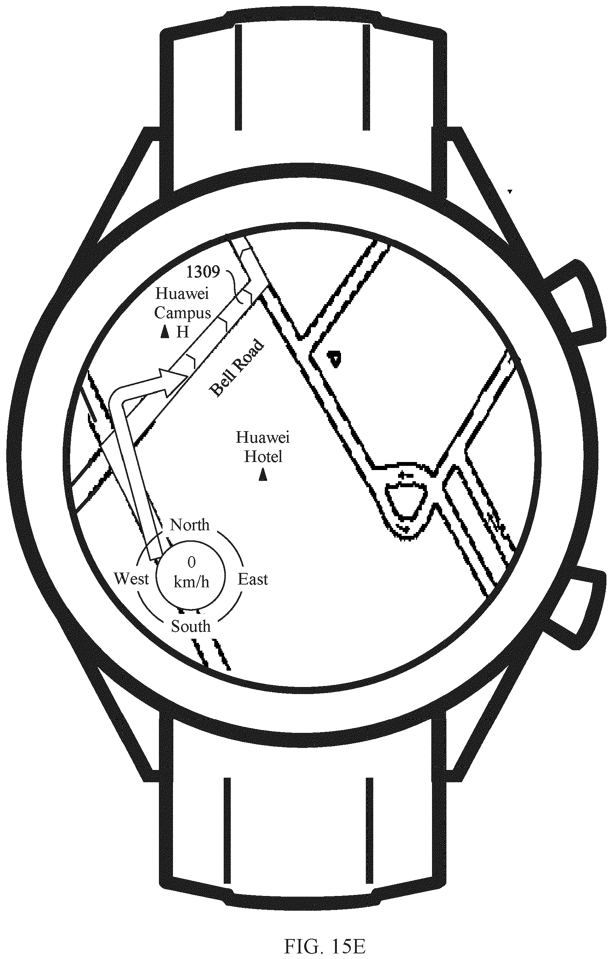

As shown in FIG. 15D and FIG. 15E, after the electronic device 100 establishes a collaboration connection to the electronic device 200, the electronic device 100 sends the navigation information to the electronic device 200, and the electronic device 200 displays the navigation information.

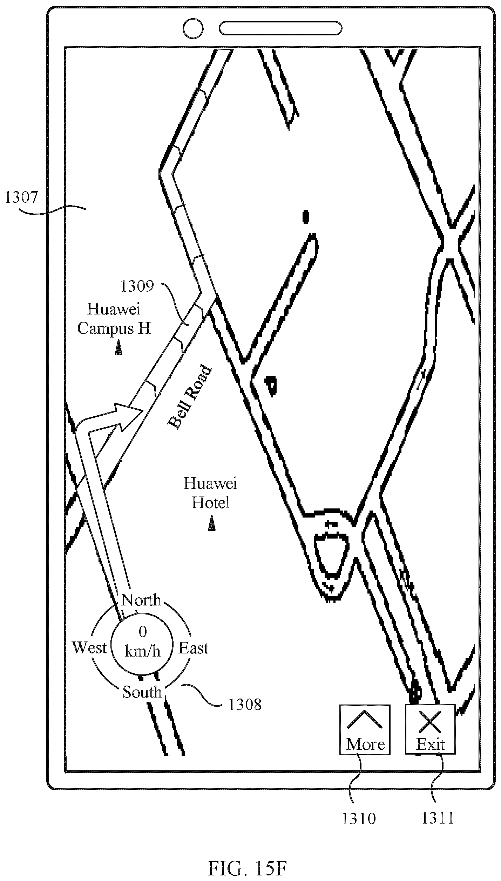

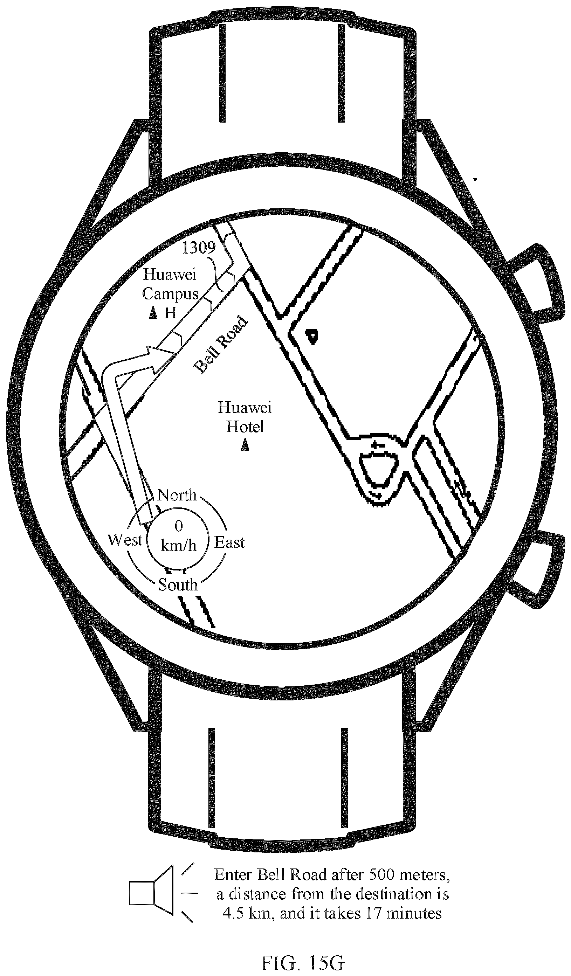

In some embodiments, as shown in FIG. 15F and FIG. 15G, after the electronic device 100 establishes the collaboration connection to the electronic device 200, the electronic device 100 may send the navigation information and audio information to the electronic device 200. The electronic device 200 displays the navigation information, and plays the audio information by using an audio output device. The information may be "Enter Bell Road after 500 meters, a distance from the destination is 4.5 km, and it takes 17 minutes".

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid-state disk, SSD)), or the like.

A person of ordinary skill in the art may understand that all or some of the procedures of the methods in the embodiments may be implemented by a computer program instructing related hardware. The program may be stored in a computer-readable storage medium. When the program is run, the procedures of the method embodiments may be performed. The storage medium includes any medium that can store program code, for example, a ROM, a random access memory RAM, a magnetic disk, or a compact disc.

## Claims

1. A device collaboration method, wherein the method comprises:
establishing, by a first electronic device (100), a collaboration connection to a second electronic device (200);
obtaining, by the first electronic device (100), a first instance attribute of a first data object and a second instance attribute of a second data object; and
sending, by the first electronic device (100), the first instance attribute to the second electronic device (200) through a first session, and sending the second instance attribute to the second electronic device (200) through a second session, wherein the first instance attribute is used by the second electronic device (200) to generate the first data object, and the second instance attribute is used by the second electronic device (200) to generate the second data object; and
wherein the first data object is associated with the first session, the second data object is associated with the second session, and the first data object is different from the second data object.

2. The method according to claim 1, wherein the method further comprises:
obtaining, by the first electronic device (100), a third instance attribute of the first data object; and
sending, by the first electronic device (100), the third instance attribute to the second electronic device (200) through the first session, wherein the first instance attribute and the third instance attribute are jointly used by the second electronic device (200) to generate the first data object.

3. The method according to claim 1, wherein the method further comprises:
obtaining, by the first electronic device (100), a third instance attribute of the first data object; and
sending, by the first electronic device (100), the third instance attribute to the second electronic device (200) through a third session, wherein the first instance attribute and the third instance attribute are jointly used by the second electronic device (200) to generate the first data object.

4. The method according to any one of claims 1 to 3, wherein after the sending, by the first electronic device (100), the first instance attribute to the second electronic device (200) through a first session, the method further comprises:
detecting, by the first electronic device (100), that the first instance attribute changes, and sending a changed first instance attribute to the second electronic device (200) through the first session, wherein the changed first instance attribute is used by the second electronic device (200) to update the first data object.

5. The method according to any one of claims 1 to 4, wherein the establishing, by a first electronic device (100), a collaboration connection to a second electronic device (200) specifically comprises:
sending, by the first electronic device (100), a collaboration message to the second electronic device (200), wherein the collaboration message comprises an instance identifier of a first instance and a session identifier of the first session, and the session identifier of the first session is associated with the first instance.

6. The method according to any one of claims 1 to 5, wherein the method further comprises:
establishing, by the first electronic device (100), a collaboration connection to a third electronic device; and
sending, by the first electronic device (100), the first instance attribute to the third electronic device through a fourth session, and sending the second instance attribute to the third electronic device through a fifth session, wherein the first instance attribute is used by the third electronic device to generate the first data object, and the second instance attribute is used by the third electronic device to generate the second data object.

7. The method according to any one of claims 1 to 5, wherein the method further comprises:
establishing, by the first electronic device (100), a collaboration connection to a third electronic device;
generating, by the first electronic device (100), a third data object;
obtaining, by the first electronic device (100), a fourth instance attribute of the third data object; and
sending, by the first electronic device (100), the fourth instance attribute to the third electronic device through a sixth session, wherein the fourth instance attribute is used by the third electronic device to generate the third data object.

8. The method according to any one of claims 1 to 7, wherein the obtaining, by the first electronic device (100), a first instance attribute of a first data object and a second instance attribute of a second data object specifically comprises:
obtaining, by the first electronic device (100), the first instance attribute of the first data object and the second instance attribute of the second data object through data interception.

9. The method according to any one of claims 1 to 8, wherein the first data object comprises at least one of a text data object, a picture data object, an audio data object, and a video data object.

10. An electronic device, wherein the electronic device is a first electronic device (100), and the first electronic device (100) comprises one or more processors and one or more memories, wherein the one or more memories are coupled to the one or more processors, the one or more memories are configured to store computer program code, the computer program code comprises computer instructions, and the one or more processors invoke the computer instructions, to enable the first electronic device (100) to perform the method according to any one of claims 1 to 9.

11. A computer-readable storage medium, configured to store computer instructions, wherein when the computer instructions are run on a first electronic device (100), the first electronic device (100) is enabled to perform the method according to any one of claims 1 to 9.

12. A computer program product, wherein when the computer program product runs on a first electronic device (100), the first electronic device (100) is enabled to perform the method according to any one of claims 1 to 9.

## Patentansprüche

1. Vorrichtungskollaborationsverfahren, wobei das Verfahren umfasst:
Herstellen, durch eine erste elektronische Vorrichtung (100), einer Kollaborationsverbindung zu einer zweiten elektronischen Vorrichtung (200);
Erhalten, durch die erste elektronische Vorrichtung (100), eines ersten Instanzattributs eines ersten Datenobjekts und eines zweiten Instanzattributs eines zweiten Datenobjekts; und
Senden, durch die erste elektronische Vorrichtung (100), des ersten Instanzattributs an die zweite elektronische Vorrichtung (200) über eine erste Sitzung, und Senden des zweiten Instanzattributs an die zweite elektronische Vorrichtung (200) über eine zweite Sitzung, wobei das erste Instanzattribut durch die zweite elektronische Vorrichtung (200) verwendet wird, um das erste Datenobjekt zu erzeugen, und das zweite Instanzattribut durch die zweite elektronische Vorrichtung (200) verwendet wird, um das zweite Datenobjekt zu erzeugen; und
wobei das erste Datenobjekt der ersten Sitzung zugeordnet ist, das zweite Datenobjekt der zweiten Sitzung zugeordnet ist und das erste Datenobjekt von dem zweiten Datenobjekt verschieden ist.

2. Verfahren nach Anspruch 1, wobei das Verfahren ferner umfasst:
Erhalten, durch die erste elektronische Vorrichtung (100), eines dritten Instanzattributs des ersten Datenobjekts; und
Senden, durch die erste elektronische Vorrichtung (100), des dritten Instanzattributs an die zweite elektronische Vorrichtung (200) über die erste Sitzung, wobei das erste Instanzattribut und das dritte Instanzattribut gemeinsam durch die zweite elektronische Vorrichtung (200) verwendet werden, um das erste Datenobjekt zu erzeugen.

3. Verfahren nach Anspruch 1, wobei das Verfahren ferner umfasst:
Erhalten, durch die erste elektronische Vorrichtung (100), eines dritten Instanzattributs des ersten Datenobjekts; und
Senden, durch die erste elektronische Vorrichtung (100), des dritten Instanzattributs an die zweite elektronische Vorrichtung (200) über eine dritte Sitzung, wobei das erste Instanzattribut und das dritte Instanzattribut gemeinsam durch die zweite elektronische Vorrichtung (200) verwendet werden, um das erste Datenobjekt zu erzeugen.

4. Verfahren nach einem der Ansprüche 1 bis 3, wobei nach dem Senden, durch die erste elektronische Vorrichtung (100), des ersten Instanzattributs an die zweite elektronische Vorrichtung (200) über eine erste Sitzung das Verfahren ferner umfasst: Erfassen, durch die erste elektronische Vorrichtung (100), dass sich das erste Instanzattribut ändert, und Senden eines geänderten ersten Instanzattributs an die zweite elektronische Vorrichtung (200) über die erste Sitzung, wobei das geänderte erste Instanzattribut durch die zweite elektronische Vorrichtung (200) verwendet wird, um das erste Datenobjekt zu aktualisieren.

5. Verfahren nach einem der Ansprüche 1 bis 4, wobei das Herstellen, durch eine erste elektronische Vorrichtung (100), einer Kollaborationsverbindung zu einer zweiten elektronischen Vorrichtung (200) speziell umfasst:
Senden, durch die erste elektronische Vorrichtung (100), einer Kollaborationsnachricht an die zweite elektronische Vorrichtung (200), wobei die Kollaborationsnachricht eine Instanzkennung einer ersten Instanz und eine Sitzungskennung der ersten Sitzung umfasst, und die Sitzungskennung der ersten Sitzung der ersten Instanz zugeordnet ist.

6. Verfahren nach einem der Ansprüche 1 bis 5, wobei das Verfahren ferner umfasst:
Herstellen, durch die erste elektronische Vorrichtung (100), einer Kollaborationsverbindung zu einer dritten elektronischen Vorrichtung; und
Senden, durch die erste elektronische Vorrichtung (100), des ersten Instanzattributs an die dritte elektronische Vorrichtung über eine vierte Sitzung, und Senden des zweiten Instanzattributs an die dritte elektronische Vorrichtung über eine fünfte Sitzung, wobei das erste Instanzattribut durch die dritte elektronische Vorrichtung verwendet wird, um das erste Datenobjekt zu erzeugen, und das zweite Instanzattribut durch die dritte elektronische Vorrichtung verwendet wird, um das zweite Datenobjekt zu erzeugen.

7. Verfahren nach einem der Ansprüche 1 bis 5, wobei das Verfahren ferner umfasst:
Herstellen, durch die erste elektronische Vorrichtung (100), einer Kollaborationsverbindung zu einer dritten elektronischen Vorrichtung;
Erzeugen, durch die erste elektronische Vorrichtung (100), eines dritten Datenobjekts; Erhalten, durch die erste elektronische Vorrichtung (100), eines vierten Instanzattributs des dritten Datenobjekts; und
Senden, durch die erste elektronische Vorrichtung (100), des vierten Instanzattributs an die dritte elektronische Vorrichtung über eine sechste Sitzung, wobei das vierte Instanzattribut durch die dritte elektronische Vorrichtung verwendet wird, um das dritte Datenobjekt zu erzeugen.

8. Verfahren nach einem der Ansprüche 1 bis 7, wobei das Erhalten, durch die erste elektronische Vorrichtung (100), eines ersten Instanzattributs eines ersten Datenobjekts und eines zweiten Instanzattributs eines zweiten Datenobjekts speziell umfasst:
Erhalten, durch die erste elektronische Vorrichtung (100), des ersten Instanzattributs des ersten Datenobjekts und des zweiten Instanzattributs des zweiten Datenobjekts über Datenabfang.

9. Verfahren nach einem der Ansprüche 1 bis 8, wobei das erste Datenobjekt mindestens eines von einem Textdatenobjekt, einem Bilddatenobjekt, einem Audiodatenobjekt und einem Videodatenobjekt umfasst.

10. Elektronische Vorrichtung, wobei die elektronische Vorrichtung eine erste elektronische Vorrichtung (100) ist und die erste elektronische Vorrichtung (100) einen oder mehrere Prozessoren und einen oder mehrere Speicher umfasst, wobei der eine oder die mehreren Speicher mit dem einen oder den mehreren Prozessoren gekoppelt sind, der eine oder die mehreren Speicher konfiguriert sind, um Computerprogrammcode zu speichern, der Computerprogrammcode Computeranweisungen umfasst und der eine oder die mehreren Prozessoren die Computeranweisungen aufrufen, um es der ersten elektronischen Vorrichtung (100) zu ermöglichen, das Verfahren nach einem der Ansprüche 1 bis 9 durchzuführen.

11. Computerlesbares Speicherungsmedium, das konfiguriert ist, um Computeranweisungen zu speichern, wobei, wenn die Computeranweisungen auf einer ersten elektronischen Vorrichtung (100) ausgeführt werden, es der ersten elektronischen Vorrichtung (100) ermöglicht wird, das Verfahren nach einem der Ansprüche 1 bis 9 durchzuführen.

12. Computerprogrammprodukt, wobei, wenn das Computerprogrammprodukt auf einer ersten elektronischen Vorrichtung (100) laufen gelassen wird, es der ersten elektronischen Vorrichtung (100) ermöglicht wird, das Verfahren nach einem der Ansprüche 1 bis 9 durchzuführen.

## Revendications

1. Procédé de collaboration de dispositifs, dans lequel le procédé comprend :
l'établissement, par un premier dispositif électronique (100), d'une connexion de collaboration avec un deuxième dispositif électronique (200) ;
l'obtention, par le premier dispositif électronique (100), d'un premier attribut d'instance d'un premier objet de données et d'un deuxième attribut d'instance d'un deuxième objet de données ; et
l'envoi, par le premier dispositif électronique (100), du premier attribut d'instance au deuxième dispositif électronique (200) par le biais d'une première session, et l'envoi du deuxième attribut d'instance au deuxième dispositif électronique (200) par le biais d'une deuxième session, dans lequel le premier attribut d'instance est utilisé par le deuxième dispositif électronique (200) pour générer le premier objet de données, et le deuxième attribut d'instance est utilisé par le deuxième dispositif électronique (200) pour générer le deuxième objet de données ; et
dans lequel le premier objet de données est associé à la première session, le deuxième objet de données est associé à la deuxième session et le premier objet de données est différent du deuxième objet de données.

2. Procédé selon la revendication 1, dans lequel le procédé comprend en outre :
l'obtention, par le premier dispositif électronique (100), d'un troisième attribut d'instance du premier objet de données ; et
l'envoi, par le premier dispositif électronique (100), du troisième attribut d'instance au deuxième dispositif électronique (200) par le biais de la première session, dans lequel le premier attribut d'instance et le troisième attribut d'instance sont utilisés conjointement par le deuxième dispositif électronique (200) pour générer le premier objet de données.

3. Procédé selon la revendication 1, dans lequel le procédé comprend en outre :
l'obtention, par le premier dispositif électronique (100), d'un troisième attribut d'instance du premier objet de données ; et
l'envoi, par le premier dispositif électronique (100), du troisième attribut d'instance au deuxième dispositif électronique (200) par le biais d'une troisième session, dans lequel le premier attribut d'instance et le troisième attribut d'instance sont utilisés conjointement par le deuxième dispositif électronique (200) pour générer le premier objet de données.

4. Procédé selon l'une quelconque des revendications 1 à 3, dans lequel, après l'envoi, par le premier dispositif électronique (100), du premier attribut d'instance au deuxième dispositif électronique (200) par le biais d'une première session, le procédé comprend en outre :
le fait de détecter, par le premier dispositif électronique (100), que le premier attribut d'instance est modifié, et l'envoi d'un premier attribut d'instance modifié au deuxième dispositif électronique (200) par le biais de la première session, dans lequel le premier attribut d'instance modifié est utilisé par le deuxième dispositif électronique (200) pour mettre à jour le premier objet de données.

5. Procédé selon l'une quelconque des revendications 1 à 4, dans lequel l'établissement, par un premier dispositif électronique (100), d'une connexion de collaboration avec un deuxième dispositif électronique (200) comprend spécifiquement :
l'envoi, par le premier dispositif électronique (100), d'un message de collaboration au deuxième dispositif électronique (200), dans lequel le message de collaboration comprend un identifiant d'instance d'une première instance et un identifiant de session de la première session, et l'identifiant de session de la première session est associé à la première instance.

6. Procédé selon l'une quelconque des revendications 1 à 5, dans lequel le procédé comprend en outre :
l'établissement, par le premier dispositif électronique (100), d'une connexion de collaboration avec un troisième dispositif électronique ; et
l'envoi, par le premier dispositif électronique (100), du premier attribut d'instance au troisième dispositif électronique par le biais d'une quatrième session, et l'envoi du deuxième attribut d'instance au troisième dispositif électronique par le biais d'une cinquième session, dans lequel le premier attribut d'instance est utilisé par le troisième dispositif électronique pour générer le premier objet de données, et le deuxième attribut d'instance est utilisé par le troisième dispositif électronique pour générer le deuxième objet de données.

7. Procédé selon l'une quelconque des revendications 1 à 5, dans lequel le procédé comprend en outre :
l'établissement, par le premier dispositif électronique (100), d'une connexion de collaboration avec un troisième dispositif électronique ;
la génération, par le premier dispositif électronique (100), d'un troisième objet de données ;
l'obtention, par le premier dispositif électronique (100), d'un quatrième attribut d'instance du troisième objet de données ; et
l'envoi, par le premier dispositif électronique (100), du quatrième attribut d'instance au troisième dispositif électronique par le biais d'une sixième session, dans lequel le quatrième attribut d'instance est utilisé par le troisième dispositif électronique pour générer le troisième objet de données.

8. Procédé selon l'une quelconque des revendications 1 à 7, dans lequel l'obtention, par le premier dispositif électronique (100), d'un premier attribut d'instance d'un premier objet de données et d'un deuxième attribut d'instance d'un deuxième objet de données comprend spécifiquement :
l'obtention, par le premier dispositif électronique (100), du premier attribut d'instance du premier objet de données et du deuxième attribut d'instance du deuxième objet de données par le biais d'une interception de données.

9. Procédé selon l'une quelconque des revendications 1 à 8, dans lequel le premier objet de données comprend au moins l'un parmi un objet de données de texte, un objet de données d'image, un objet de données audio et un objet de données vidéo.

10. Dispositif électronique, dans lequel le dispositif électronique est un premier dispositif électronique (100), et le premier dispositif électronique (100) comprend un ou plusieurs processeurs et une ou plusieurs mémoires, dans lequel la ou les mémoires sont couplées au ou aux processeurs, la ou les mémoires sont configurées pour stocker un code de programme informatique, le code de programme informatique comprend des instructions informatiques, et le ou les processeurs appellent les instructions informatiques, pour activer le premier dispositif électronique (100) afin de réaliser le procédé selon l'une quelconque des revendications 1 à 9.

11. Support de stockage lisible par ordinateur, configuré pour stocker des instructions informatiques, dans lequel, lorsque les instructions informatiques sont exécutées sur un premier dispositif électronique (100), le premier dispositif électronique (100) est activé pour réaliser le procédé selon l'une quelconque des revendications 1 à 9.

12. Produit-programme d'ordinateur, dans lequel, lorsque le produit-programme d'ordinateur s'exécute sur un premier dispositif électronique (100), le premier dispositif électronique (100) est activé pour réaliser le procédé selon l'une quelconque des revendications 1 à 9.
